# EUROPÄISCHE PATENTSCHRIFT

(11) **EP 0 925 828 B1**
(45) Veröffentlichungstag und Bekanntmachung des Hinweises auf die Patenterteilung: **29.09.2004**
(21) Anmeldenummer: 97122306.0
(22) Anmeldetag: 17.12.1997
(51) Int. Cl.: B01J 19/00, B01L 3/00, C12N 15/10

(54) **Vorrichtung zur Durchführung chemischer Reaktionsfolgen**
Device for carrying out sequential chemical reactions
Dispositif pour effectuer des réactions chimiques sequentielles

(43) Veröffentlichungstag der Anmeldung: 30.06.1999
(73) Patentinhaber: EUROPÄISCHES LABORATORIUM FÜR MOLEKULARBIOLOGIE (EMBL), D-69117 Heidelberg (DE)
(72) Erfinder: Zimmermann, Jürgen, 68199 Mannheim (DE); Ansorge, Wilhelm, 69251 Gaiberg (DE); Sieber, Manfred, 52385 Nideggen (DE)
(74) Vertreter: Prechtel, Jörg, Dipl.-Phys. Dr.

(56) Entgegenhaltungen:
- EP-A- 0 248 690
- WO-A-89/10188
- DE-A- 19 605 814
- US-A- 4 948 564
- US-A- 5 538 849
- US-A- 5 645 723

## Beschreibung

Die vorliegende Erfindung betrifft eine Vorrichtung zur Durchführung chemischer Reaktionsfolgen.

Bei vielen chemischen oder biochemischen Verfahren, welche in mehreren Stufen durchgeführt werden, kann es erforderlich sein, den Wechsel eines Reaktionsmillieus vorzunehmen, z. B. den Wechsel zwischen einem polaren und einem unpolaren Lösungsmittel. Ferner kann es erforderlich sein, in einer Reaktionsstufe Reaktionsprodukte oder Reaktionsnebenprodukte abzutrennen. Hierzu kommen herkömmlicherweise Fällung, Filtration, Zentrifugation und das Trocknen von Materialien zum Einsatz. Insbesondere wird es bei derartigen Reaktionsfolgen oftmals gewünscht, eine Vielzahl derartiger Reaktionen parallel durchzuführen, um beispielsweise mehrere verschiedene Ausgangsmaterialien gleichzeitig untersuchen zu können, oder um durch die Verteilung verschiedener Reaktionsergebnisse eine statistische Aussage über zu untersuchende Materialien oder Reaktionsabläufe treffen zu können.

Aus der EP-0 365 668 ist eine Vorrichtung zur Durchführung chemischer Reaktionsfolgen bekannt, mit welcher sich gleichzeitig mehrere biochemische Reaktionen durchführen lassen, wie beispielsweise die Synthese von DNA-Bruchstücken. Diese bekannte Vorrichtung besteht aus einer Mehrzahl von übereinander angeordneten Plattenelementen, wobei in jedem Plattenelement eine Reaktionskammer sowie eine Mehrzahl von Durchlaßkanälen auf einer Linie mit der Reaktionskammer angeordnet ist. Durch seitliches Verschieben jeweiliger Plattenelemente ist es möglich, die Reaktionskammer eines Plattenelements entweder mit der Reaktionskammer anderer Plattenelemente oder mit den Durchlaßkanälen anderer Plattenelemente in vertikale Flucht zu bringen. Oberhalb der Platten ist eine Zuführquelle zur Zufuhr der Basen A, C, G und T sowie eines organischen Lösungsmittels angeordnet. Durch geeignete Positionierung ist es also möglich, in jede Reaktionskammer der verschiedenen Plattenteile eine der Basen oder das Lösungsmittel einzuleiten. Ferner ist jede Reaktionskammer derart aufgebaut, daß sie nach unten hin durchlässig ist und durch eine poröse Membrane abgeschlossen ist, so daß in den einzelnen Reaktionskammern Glaskügelchen, an welchen Reaktionen auftreten, gehalten sind, eine von oben eingeleitete Flüssigkeit jedoch nach unten durchtreten kann. Soll nun vermittels dieser bekannten Vorrichtung gleichzeitig mit der gleichen Base in allen oder mehreren Reaktionskammern die gleiche Reaktion durchgeführt werden, so sind diese Reaktionskammern, wie bereits angesprochen, in vertikaler Flucht unter der jeweiligen Zuführstelle der betreffenden Base anzuordnen. Ist eine derartige Anordnung getroffen, so wird nachfolgend die Base zugeführt, so daß sie in die oberste angeordnete Reaktionskammer eintritt, durch die poröse Membran hindurchtritt und in die nächste darunterliegende Reaktionskammer eintritt, usw. Dabei besteht das Problem, daß in den weiter oben angeordneten Reaktionskammern bei Einleiten der Base bereits die Reaktionen auftreten und daß mit der durch diese hindurchtretenden Flüssigkeit bereits die Reaktionserzeugnisse in darunterliegende Reaktionskammern mitgeführt werden. Bei einer Vielzahl an Prozessen, z. B. der Oligonucleotidsynthese, ist diese Verschleppung von Reaktionserzeugnissen unerheblich. Bei der Aufreinigung von biologischem Material, wie z. B. von DNA, würde dies jedoch die Reaktionsergebnisse unbrauchbar machen.

Es ist daher die Aufgabe der vorliegenden Erfindung, eine Vorrichtung zur Durchführung chemischer Reaktionsfolgen vorzusehen, mit welcher auf einfache Weise parallel Reaktionen durchgeführt werden können, ohne daß die Gefahr der gegenseitigen Beeinträchtigung von gleichzeitig durchgeführten Reaktionen besteht. Erfindungsgemäß wird diese Aufgabe durch eine Vorrichtung zur Durchführung chemischer Reaktionsfolgen gelöst, welche umfaßt: einen Träger mit einer Mehrzahl von Positionierebenen, welche in einer Flußrichtung aufeinanderfolgend im wesentlichen parallel zueinander angeordnet sind, wobei jede Positionierebene eine Mehrzahl von im wesentlichen orthogonal zur Flußrichtung nebeneinander liegenden Positionierbereichen umfaßt und wobei zu wenigstens einem Positionierbereich in einer der Positionierebenen ein zu diesem in Flußrichtung ausgerichteter Positionierbereich in wenigstens einer unmittelbar benachbarten Positionierebene vorhanden ist, in mindestens einer der Positionierebenen wenigstens einen Reaktionsgefäßschlitten mit wenigstens einem Reaktionsgefäß, wobei der Reaktionsgefäßschlitten in der zugeordneten Positionierebene bewegbar ist, so daß das wenigstens eine Reaktionsgefäß oder wenigstens ein Teil der an dem Reaktionsgefäßschlitten getragenen Reaktionsgefäße in wenigstens einem Transfer-Positionierbereich anordenbar ist, wobei jedem in dem wenigstens einen Transfer-Positionierbereich angeordneten Reaktionsgefäß ein Reaktionsgefäß einer unmittelbar benachbarten Positionierebene zum wahlweisen Reagenzientransfer zwischen diesen Reaktionsgefäßen zuordenbar ist.

Bei der erfindungsgemäßen Vorrichtung ist vorgesehen, daß in jeder Positionierebene wenigstens ein Reaktionsgefäß vorgesehen ist, und daß durch die Bewegung der Reaktionsgefäßschlitten verschiedener Positionierebenen in geeignete Transfer-Positionierbereiche ein Reagenzienaustausch zwischen den einzelnen Ebenen stattfinden kann. Dies bedeutet, daß für jede prozessierte Probe in der Flußrichtung ein Prozessierkanal bereitgestellt ist, welcher ausschließlich für eine Probe bereitgestellt ist. Eine Verschleppung von Reaktionserzeugnissen von einem Prozessierkanal in einen anderen kann dabei nicht auftreten. Dies hat zur Folge, daß selbst hochempfindliche Reaktionen in einer großen Anzahl parallel zueinander ohne gegenseitige Beeinträchtigung durchgeführt werden können. Durch die geeignete Auswahl der Anzahl an Positionierebenen ist es möglich, Reaktionsfolgen durchzuführen, welche eine beliebige Anzahl an Reaktionsschritten beinhalten, wobei aufgrund der gestapelten Anordnung der Positionierebenen zur parallelen Durchführung selbst einer großen Anzahl an Positionierebenen nur relativ wenig Laborraum beansprucht wird.

Es wird darauf hingewiesen, daß im vorliegenden Text der Ausdruck "Reagenzien" jegliches Material umfaßt, das einerseits zur Herbeiführung, zur Unterstützung von Reaktionen, als Katalysator oder dergleichen verwendet werden kann. Andererseits umfaßt dieser Ausdruck auch Reaktionserzeugnisse, Nebenprodukte oder dergleichen, welche entweder als Reaktionsabfall zu beseitigen sind oder in weiteren Reaktionsstufen weiter verarbeitet werden.

In einer besonders vorteilhaften Ausgestaltung der erfindungsgemäßen Vorrichtung ist vorgesehen, daß der wenigstens eine Reaktionsgefäßschlitten wenigstens eine Reihe von Reaktionsgefäßen trägt, in der wenigstens ein Reaktionsgefäß angeordnet ist. Die reihenartige Anordnung von Reaktionsgefäßen ermöglicht eine besonders einfache und platzsparende Durchführung mehrerer Reaktionen parallel zueinander.

Dabei ist es vorteilhaft, wenn die wenigstens eine Reihe von Reaktionsgefäßen an dem wenigstens einen Reaktionsgefäßschlitten durch einen dieser Reihe zugeordneten Reaktionsgefäßträger getragen ist.

Bei der erfindungsgemäßen Vorrichtung sind die Reaktionsgefäßschlitten in den einzelnen Positionierebenen bewegbar, d. h. die Reaktionsgefäßschlitten verschiedener Ebenen sind relativ zueinander bewegbar. Dies bedingt, daß in den Positionierbereichen der Reaktionsgefäßschlitten einander unmittelbar benachbarter Positionierebenen in der Flußrichtung ein Zwischenraum geschaffen sein muß, um eine derartige freie Bewegbarkeit zu ermöglichen. Um jedoch beim Regenzientransfer zwischen unmittelbar benachbarten Positionierebenen sicherstellen zu können, daß die Reaktionsgefäße, zwischen welchen eine Reagenzienübertragung stattfinden soll, möglichst nahe beieinander liegen, wird vorgeschlagen, daß jedes an dem wenigstens einen Reaktionsgefäßschlitten getragene Reaktionsgefäß zum Reagenzientransfer zwischen diesem und einem jeweils zugeordneten Reaktionsgefäß in einer unmittelbar benachbarten Positionierebene in der Flußrichtung auf das zugeordnete Reaktionsgefäß der unmittelbar benachbarten Positionierebene zu bewegbar sind. Es kann somit die Gefahr einer unbeabsichtigten Abgabe von Reagenzien zur Umgebung hin deutlich verringert werden.

Um eine derartige Annäherung der Reaktionsgefäße unmittelbar benachbarter Positionierebenen erreichen zu können, kann beispielsweise vorgesehen sein, daß der die wenigstens eine Reihe von Reaktionsgefäßen tragende Reaktionsgefäßträger an dem wenigstens einen Reaktionsgefäßschlitten in der Flußrichtung hin- und herbewegbar angeordnet ist. Es wird somit erreicht, daß durch die Bewegung des Reaktionsgefäßträgers bereits eine Vielzahl an Reaktionsgefäßen hin und her bewegt wird und nicht für einzelne Reaktionsgefäße eigenständige Bewegungsmittel vorgesehen sein müssen.

Vorteilhafterweise sind dann Bewegungsmittel vorgesehen zum Bewirken der Hin- und Herbewegung des Reaktionsgefäßträgers.

Die Bewegungsmittel können beispielsweise zum Ausüben einer Druckkraft auf jedes an dem Reaktionsgefäßträger getragene Reaktionsgefäß ausgebildet sein, wobei dann bei Ausüben der Druckkraft jedes Reaktionsgefäß mit dem Reaktionsgefäßträger gegen eine Vorspannkraft auf das jeweils zugeordneten Reaktionsgefäß der unmittelbar benachbarten Positionierebene zu bewegbar ist.

In besonders einfacher Weise kann die Vorspannkraft durch zwischen dem wenigstens einen Reaktionsgefäßschlitten und dem Reaktionsgefäßträger wirkende Vorspannmittel, vorzugsweise Federmittel, elastisch verformbare Kunststoffelemente oder dergleichen, erzeugt werden.

Alternativ ist es jedoch möglich, daß Verschiebungsmittel vorgesehen sind, welche direkt zwischen dem wenigstens einen Reaktionsgefäßschlitten und dem Reaktionsgefäßträger wirken.

Um die bereits vorangehend angesprochene unbeabsichtigte Abgabe von Reagenzien zur Umgebung hin weiter eindämmen zu können, bzw. vollständig unterdrücken zu können, wird vorgeschlagen, daß Dichtungsmittel vorgesehen sind, welche in einem aufeinanderzubewegten Zustand der Reaktionsgefäße zweier unmittelbar benachbarter Positionierebenen einen im wesentlichen fluiddichten Abschluß zwischen den einander jeweils zugeordneten Reaktionsgefäßen der verschiedenen Positionierebenen erzeugen.

Dabei kann gemäß einer besonders vorteilhaften Ausgestaltung vorgesehen sein, daß die Dichtungsmittel ein im wesentlichen spitz ausgebildetes Austrittsende des wenigstens einen Reaktionsgefäßes einer Positionierebene umfassen sowie ein durch Membranmittel abgeschlossenes Aufnahmeende des jeweils zugeordneten Reaktionsgefäßes der anderen der Positionierebenen umfassen, wobei bei gegeseitigem Annähern der Reaktionsgefäße der verschiedenen Positionierebenen die Membranmittel durch die spitzen Austrittsenden durchdringbar sind und mit diesen einen fluiddichten Abschluß bilden.

Alternativ ist es möglich, daß die Dichtungsmittel eine Dichtungsmateriallage an einer Seite des Reaktionsgefäßträgers umfassen, welche den zugeordneten Reaktionsgefäßen der unmittelbar benachbarten Positionierebene zugewandt ist, wobei bei Bewegung des Reaktionsgefäßträgers auf die Reaktionsgefäße der unmittelbar benachbarten Positionierebene zu die Dichtungsmateriallage an Aufnahmeenden der Reaktionsgefäße der unmittelbar benachbarten Positionierebene zur Anlage kommt und mit diesen einen fluiddichten Abschluß bildet.

Um bei Erzeugung des fluiddichten Abschlusses zwischen zwei Reaktionsgefäßen, zwischen welchen ein Reagenzientransfer stattfinden soll, eine Ent- bzw. Belüftung der Reaktionsgefäße vorzusehen, insbesondere desjenigen Reaktionsgefäßes, in welchen Flüssigkeit eingegeben wird, wird vorgeschlagen, daß ferner Entlüftungsmittel vorgesehen sind, welche bei fluiddichter Verbindung der Reaktionsgefäße zweier unmittelbar benachbarter Positionierebenen eine Belüftung bzw. Entlüftung der Reaktionsgefäße ermöglichen.

Dabei kann beispielsweise vorgesehen sein, daß die Entlüftungsmittel Entlüftungskanalmittel umfassen, welche sich von den Austrittsenden der Reaktionsgefäße, vorzugsweise innerhalb der jeweiligen Reaktionsgefäße, wegerstrecken und vorzugsweise über Filtermittel zur Umgebung hin offen sind. Bei einer der-' artigen Ausgestaltung sind die Entlüftungsmittel jeweils direkt in den Reaktionsgefäßen vorgesehen, so daß keine externen Entlüftungseinrichtungen vorzusehen sind, was zu einem besonders einfachen Aufbau der erfindungsgemäßen Vorrichtung führt.

Alternativ ist es auch möglich, daß das wenigstens eine Reaktionsgefäß an dem zugeordneten Reaktionsgefäßträger im Bereich seines Austrittsendes getragen ist, und daß die Entlüftungsmittel an dem Reaktionsgefäßträger vorgesehene, diesen und die Dichtungsmateriallage näherungsweise in der Flußrichtung durchsetzende und das Austrittsende des wenigstens einen Reaktionsgefäßes umgebende Entlüftungskanalmittel umfassen, welche bei Anliegen des Reaktionsgefäßträgers an den Aufnahmeenden der zugeordneten Reaktionsgefäße der unmittelbar benachbarten Positionierebene eine Gasströmungsverbindung zwischen dem Innenraum des jeweils zugeordneten Reaktionsgefäßes der unmittelbar benachbarten Positionierebene und der Umgebung herstellen, vorzugsweise über Filtermittel.

Um bei Eingabe flüssiger Reagenzien in die Reaktionsgefäße zu verhindern, daß diese unmittelbar wieder aus Austrittsbereichen der Reaktionsgefäße austreten, wird vorgeschlagen, daß ferner Verschlußmittel, vorzugsweise Filtermittel, in dem wenigstens einen Reaktionsgefäß vorzugsweise im Bereich des Austrittsendes vorgesehen sind, welche Verschlußmittel einen Fluiddurchtritt nur bei externer Einwirkung ermöglichen.

Beispielsweise kann die externe Einwirkung das Anlegen eines Drucks oder eines Unterdrucks an das Innere der Reaktionsgefäße, oder durch elektrische, magnetische oder Gravitationseinwirkung erfolgen.

Um in die Reaktionsgefäße Reagenzien eingeben zu können, bzw. aus den Reaktionsgefäßen Reagenzien, d. h. Reaktionserzeugnisse und Nebenprodukte entnehmen zu können und beispielsweise erneut in eine darüber liegende Positionierebene transferieren zu können, wird vorgeschlagen, daß ferner Reagenzien-Eingabe/Entnahme-Mittel vorgesehen sind zum Eingeben von Reagenzien in das wenigstens eine Reaktionsgefäß in wenigstens einer der Positionierebenen bzw. zum Entnehmen von Reagenzien aus dem wenigstens einen Reaktionsgefäß von wenigstens einer der Positionierebene.

Um auch hier die unbeabsichtigte Abgabe von Reagenzien zur Umgebung hin vermeiden zu können, wird vorgeschlagen, daß die Reagenzien-Eingabe/Entnahme-Mittel zur Eingabe/Entnahme von Reagenzien mit den jeweiligen Reaktionsgefäßen fluiddicht verbindbar sind.

Um vermittels der Reagenzien-Eingabe/Entnahme-Mittel jede Positionierebene, d. h. die in dieser angeordneten Reaktionsgefäße, bedienen zu können, wird vorgeschlagen, daß jede Positionierebene wenigstens einen Eingabe/Entnahme-Positionierbereich umfaßt, wobei bei Positionierung wenigstens eines Teils der in einer Positionierebene vorgesehenen Reaktionsgefäße in dem wenigstens einen Eingabe/Entnahme-Positionierbereich diese Reaktionsgefäße für die Reagenzien-Eingabe/Entnahme-Mittel zur Eingabe/Entnahme von Reagenzien in diese bzw. aus diesen in Flußrichtung von einer Seite, vorzugsweise einer Oberseite, her frei zugänglich sind.

Gemäß einer besoders vorteilhaften Ausgestaltung kann vorgesehen sein, daß die Reagenzien Eingabe/Entnahme-Mittel ferner die Bewegungsmittel bilden, welche die Druckkraft auf die Reaktionsgefäße zum Verschieben desselben in der Flußrichtung erzeugen.

Gemäß einer Ausgestaltungsform kann vorgesehen sein, daß die Reaktionsgefäßschlitten in der jeweils zugeordneten Positionierebenen linear bewegbar sind. Alternativ ist es jedoch auch möglich, die Reaktionsgefäßschlitten in den zugeordneten Positionierebenen auf näherungsweise kreisförmigen Bahnen zu bewegen. Dies bedeutet, daß einerseits die erfindungsgemäße Vorrichtung einen linearen Aufbau hat und in der zweiten Ausführungsform einen näherungsweise rotationssymmetrischen Aufbau hat, wobei die Reaktionsgefäßschlitten in den einzelnenPositionierebenen dann um eine zentrale Mittelache drehbar sind.

Um eine nahezu automatische Durchführung der Reaktionen bzw. Reaktionsfolgen vorsehen zu können, wird vorgeschlagen, daß Mittel vorgesehen sind zum Bewirken der Bewegung der Reaktionsgefäßschlitten in den zugeordneten Positionierebenen.

Gemäß einer besonders vorteilhaften Ausgestaltung kann dann wieder vorgesehen sein, daß die Reagenzien-Eingabe/Entnahme-Mittel die Mittel zum Bewirken der Bewegung der Reaktionsgefäßschlitten in den zugeordneten Positionierebenen bilden.

Um am Ende der jeweiligen Reaktionsfolgen die Reaktionserzeugnisse auffangen zu können, wird vorgeschlagen, daß das wenigstens eine Reaktionsgefäß in einer der Positionierebenen, vorzugsweise der in der Flußrichtung letzten Positionierebene, ein Auffanggefäß zur Aufnahme der bei der chemischen Reaktion erzeugten Reaktionserzeugnisse ist.

In verschiedenen Schritten kann es erforderlich sein, die in den Reaktionsgefäßen vorhandenen flüssigen Reagenzien als Reaktions-Nebenerzeugnisse bzw. Abfälle abzuführen und lediglich die beispielsweise an gewissen Substraten gehaltenen Reagenzien weiter zu verwenden. Dabei ist es vorteilhaft, wenn folgend auf die in Flußrichtung letzte Positionierebene Auffangwannenmittel vorgesehen sind, in welche dann diese flüssigen Reaktions-Nebenerzeugnisse ausgespült werden können.

Insbesondere bei Vorsehen einer Vielzahl an Positionierebenen ist es vorteilhaft, vorzusehen, daß wenigstens ein Teil der Positionierebenen einen Aufnahme-Positionierbereich und einen Abgabe-Positionierbereich umfaßt, daß der Aufnahme-Positionierbereich einer derartigen Positionierebene in Flußrichtung mit dem Abgabe-Positionierbereich einer in Flußrichtung vorangehenden Positionierebene ausgerichtet ist, und/oder daß der Abgabe-Positionierbereich einer derartigen Positionierebene in Flußrichtung mit dem Aufnahme-Positionierbereich einer in Flußrichtung folgenden Positionierebene ausgerichtet ist. Da ein Reagenzientransfer lediglich zwischen unmittelbar benachbarten Positionierebenen stattfindet, genügt es also, in jeder Positionsebene einen Aufnahme-Positionierbereich und einen Abgabe-Positionierbereich vorzusehen, wobei dennoch beispielsweise Positionierbereiche vorgesehen sein können, die Zwischenstellungen definieren.

Da die in Flußrichtung erste Positionierebene für die Reagenzien-Eingabe/Entnahme-Mittel immer frei zugänglich ist, kann vorgesehen sein, daß wenigstens die in Flußrichtung erste Positionierebene einen Aufnahme/Abgabe-Positionierbereich umfaßt, der sowohl den Aufnahme-Positionierbereich als auch den Abgabe-Positionierbereich bildet. In entsprechender Weise ist es ausreichend, wenn die in Flußrichtung letzte Positionierebene lediglich Aufnahme-Positionierbereiche, vorzugsweise einen Aufnahme-Positionierbereich, umfaßt.

Zur Gewährleistung der freien Positionierbarkeit der jeweiligen Reaktionsgefäßschlitten in jedem der für diese vorgesehenen Positionierbereiche, wird vorgeschlagen, daß die Positionierbereiche der verschiedenen Positionierebenen derart angeordnet sind, daß sie in jeder Positionierebene derart in ihren jeweiligen Positionierbereichen anordenbar sind, daß jeder Reaktionsgefäßschlitten in jeder anderen Positionierebene vorzugsweise vermittels Reagenzien-Eingabe/Entnahme-Mitteln mit seinem/seinen zugeordneten Reaktionsgefäß/en in jedem der für diese Reaktionsgefäße vorgesehenen Positionierbereiche anordenbar ist.

Beispielsweise kann eine derartige Anordnung getroffen werden, daß die Aufnahme- und Abgabe-Positionierbereiche der verschiedenen Positionierebenen in treppenförmiger Struktur angeordnet sind, wobei jeweils wenigstens ein Teil jedes Abgabe-Positionierbereichs nicht durch einen Positionierbereich einer in Flußrichtung vorangehenden Positionierebene überdeckt ist. Diese Anordnung führt dazu, daß in jeder Positionierebene ein Bereich vorgesehen ist, in dem die in dieser Positionierebene angeordneten Reaktionsgefäße beispielsweise von oben her für die Reagenzien-Eingabe/Entnahme-Mittel frei zugänglich sind, einerseits zur Eingabe/Entnahme von Reagenzien, andererseits zur Bewirkung der Verschiebung des zugeordneten Reaktionsgefäßschlittens.

Die vorliegende Erfindung betrifft ferner ein Verfahren zur Durchführung chemischer Reaktionsfolgen, umfassend die Schritte:
a) Einbringen von Reagenzien in das wenigstens eine Reaktionsgefäß einer ersten Positionierebene,
b) Durchführen einer chemischen Reaktion, einer Adsorptionsreaktion, einer Absorptionsreaktion einer Stoffmischung oder dergleichen in dem wenigstens einen Reaktionsgefäß,
c) Anordnen des wenigstens einen Reaktionsgefäßes der ersten Positionierebene und des jeweils zugeordneten Reaktionsgefäßes einer auf die erste Positionierebene unmittelbar folgenden zweiten Positionierebene jeweils in einem Transfer-Positionierbereich der beiden Positionierebenen,
d) gesteuertes Transferieren wenigstens eines Teils von im Schritt b) erhaltenen Reaktionserzeugnissen in das jeweils zugeordnete Reaktionsgefäß der zweiten Positionierebene, wobei das wenigstens eine Reaktionsgefäß der ersten Positionierebene oder/und das jeweils zugeordnete Reaktionsgefäß der zweiten Positionierebene derart positionierbar sind, daß das wenigstens eine Reaktionsgefäß in der zweiten Positionierebene zur freien Eingabe von Reagenzien in dieses vermittels Reagenzien-Eingabe/Entnahme-Mitteln frei zugänglich sind oder/und zur gesteuerten Übertragung der in diesem enthaltenen Reaktionserzeugnisse in ein jeweils zugeordnetes Reaktionsgefäß einer auf die zweite Positionierebene folgenden dritten Positionierebene positioniert sind.

Die erfindungsgemäße Vorrichtung wird nachfolgend mit Bezug auf die beiliegenden Zeichnungen anhand bevorzugter Ausführungsformen detailliert beschrieben. Es zeigt:
- Fig. 1: eine schematische Seitenansicht einer erfindungsgemäßen Vorrichtung zur Durchführung chemischer Reaktionsfolgen;
- Fig. 2: eine Schnittansicht längs einer Linie II-II in Fig. 1, wobei jedoch in jeder Positionierebene Reaktionsgefäße bzw. Auffanggefäße dargestellt sind und wobei in der obersten Positionierebene ein Teil der dargestellten Reaktionsgefäße in einem abgesenkten Zustand ist;
- Fig. 3: eine Draufsicht auf einen Reaktionsgefäßschlitten der erfindungsgemäßen Vorrichtung;
- Fig. 4: eine Seitenansicht eines teilweise längs einer Linie IV-IV in Fig. 5 geschnittenen Dispenser-Werkzeugs;
- Fig. 5: eine Schnittansicht des Dispenser-Werkzeugs längs einer Linie V-V in Fig. 4;
- Fig. 6: eine Teilschnittansicht einer Ausführungsform von an einem Reaktionsgefäßträger getragenen Reaktionsgefäßen;
- Fig. 7: eine Teilschnittansicht einer alternativen Ausgestaltungsform von an einem Reaktionsgefäßträger getragenen Reaktionsgefäßen längs einer Linie VII-VII in Fig. 8;
- Fig. 8: eine Draufsicht auf den Reaktionsgefäßträger der Fig. 7; und
- Fig. 9: eine skizzenhafte Darstellung einer Ausführungsform der erfindungsgemäßen Vorrichtung mit fünf Positionierebenen.

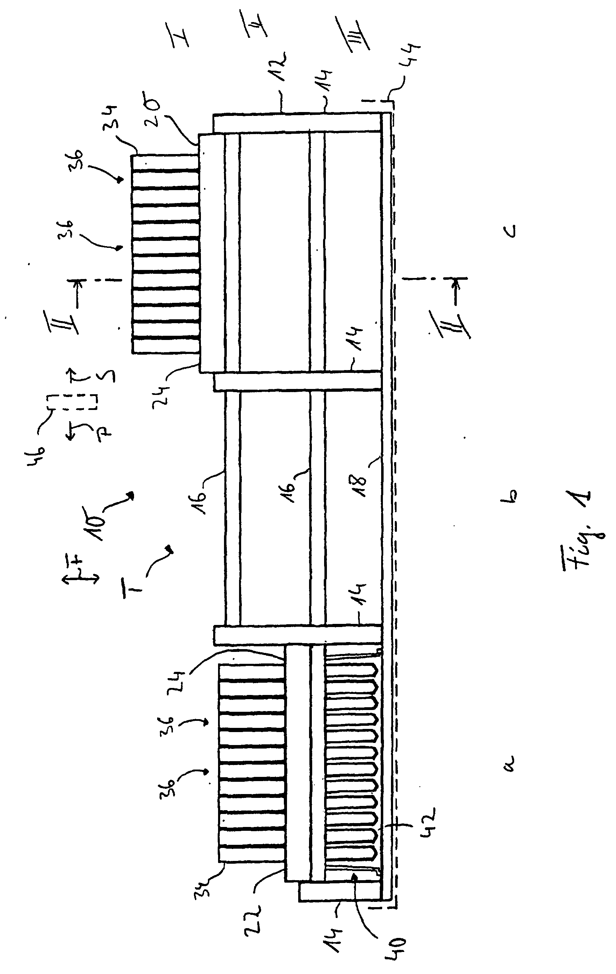

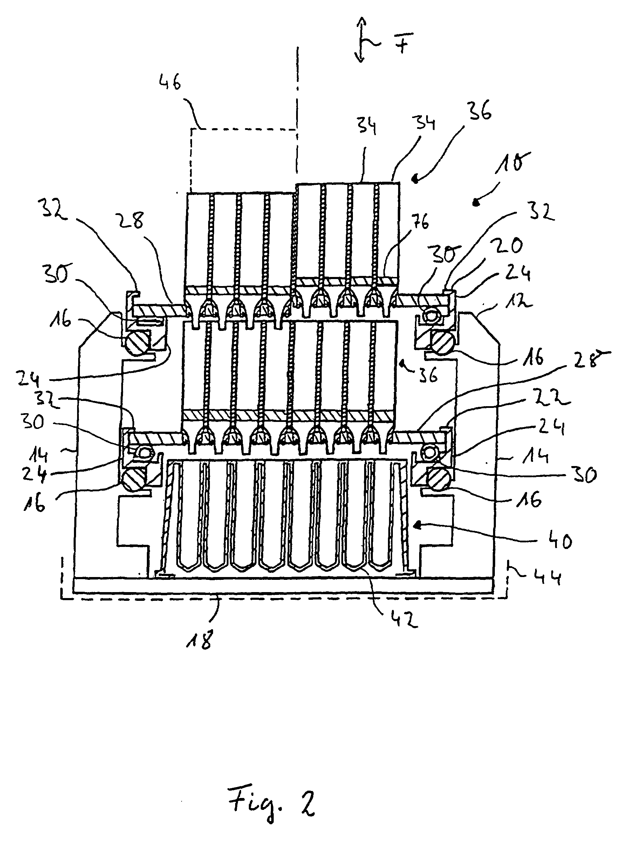

Die Fig. 1 und 2 zeigen eine allgemein mit 10 bezeichnete Vorrichtung zur Durchführung von Reaktionsfolgen. Die Vorrichtung 10 umfaßt einen Träger 12, der eine Mehrzahl von übereinander angeordneten Positionierebenen I, II und III sowie eine Mehrzahl von Positionierbereichen a, b, c definiert. Der Träger 12 weist Vertikalstreben 14 auf, die in einer Reihe aufeinanderfolgend jeweils an beiden Seiten des Trägers 12 angeordnet sind und die in einer Längsrichtung durch Horizontalstreben 16 bzw. eine möglicherweise rahmenartig ausgebildete Bodenplatte 18 miteinander verbunden sind. Die Vertikalstreben 14 und die Horizontalstreben 16 bzw. die Bodenplatte 18 sind durch geeignete Mittel, wie z. B. Schrauben oder dergleichen, fest miteinander verbunden.

Die Horizontalstreben 16 bilden jeweils Führungsschienen für Reaktionsgefäßschlitten 20, 22, wobei der Reaktionsgefäßschlitten 20 in der Ebene I angeordnet ist und der Reaktionsgefäßschlitten 22 in der Ebene II angeordnet ist.

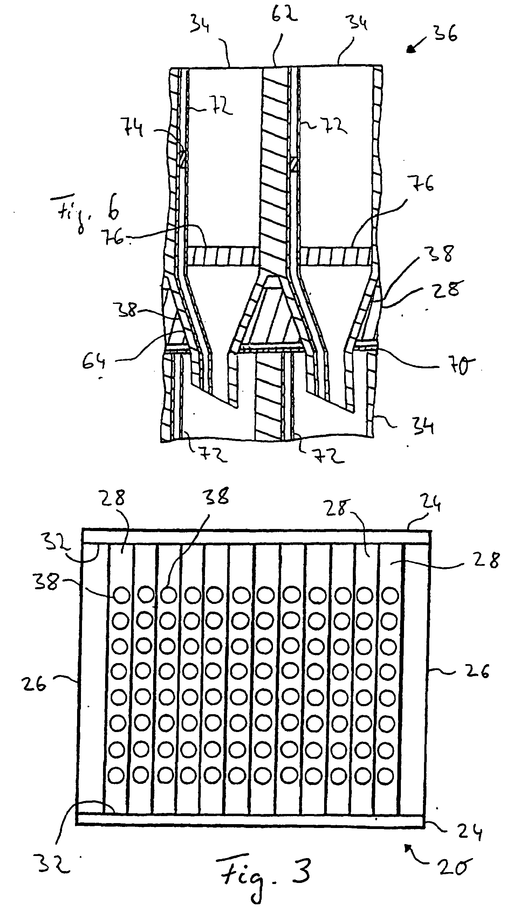

Wie auch in Fig. 3 zu erkennen, umfaßt jeder Reaktionsgefäßschlitten seitliche Führungsteile 24, die an jeweiligen Endbereichen durch Verbindungsteile 26 fest miteinander verbunden sind. Die Führungsteile 24 und die Verbindungsteile 26 bilden somit einen festen Rahmen für die Reaktionsgefäßschlitten 20 bzw. 22. Mit den Führungsteilen 24 sind die Reaktionsgefäßschlitten 20 bzw. 22 auf den jeweiligen Horizontalstreben 16 in den Positionierebenen I, II frei verschiebbar. Zu diesem Zwecke können zwischen den Führungsteilen 24 bzw. den Horizontalstreben 26 in den Fig. nicht dargestellte Gleit- oder Rollenlagermittel oder dergleichen vorgesehen sein. Ferner können, um die Führungsschlitten in jeweiligen Positionierbereichen zu fixieren, die Reaktionsgefäßschlitten 20, 22 selbstbremsend ausgebildet sein oder es können bestimmte Rast- oder Fixierelemente vorgesehen sein, die eine unbeabsichtigte Verschiebung der Reaktionsgefäßschlitten 20, 22 verhindern.

Jeder Reaktionsgefäßschlitten 20, 22 weist ferner eine Mehrzahl von Reaktionsgefäßträgern 28 auf. Die Reaktionsgefäßträger 28 erstrecken sich zwischen den beiden Führungsteilen 24 und sind in aufeinanderfolgender Weise zwischen den Verbindungsteilen 26 angeordnet. Wie insbesondere in Fig. 2 zu erkennen ist, sind die Reaktionsgefäßträger 28 an den jeweiligen Reaktionsgefäßschlitten 20, 22 derart angebracht, daß sie in Richtung eines Pfeils F, welcher im wesentlichen einer Flußrichtung entspricht, hin und her bewegbar sind. Zu diesem Zweck sind die Reaktionsgefäßträger 28 über elastische Elemente 30 auf den Führungsteilen 24 gelagert und durch Halteabschnitte 32 der Führungsteile 24 gegen ein Ablösen von den Führungsteilen 24 gesichert. Die elastischen Elemente 30 können beispielsweise durch Kunststoffschläuche gebildet sein, die aufgrund ihrer Elastizität bei Krafteinwirkung elastisch verformbar sind und bei Freigabe sich wieder ausdehnen und somit die Reaktionsgefäßträger 28 in einer Richtung nach oben in Fig. 2 vorspannen.

Wie in den Figuren ferner zu erkennen ist, ist an jedem Reaktionsgefäßträger 28 der Reaktionsgefäßschlitten 20, 22 eine Reihe 36 von Reaktionsgefäßen 34 getragen. Zu diesem Zweck weist jeder Reaktionsgefäßträger 28 eine Mehrzahl an Durchgangsöffnungen 38 auf, wobei die Anzahl an Durchgangsöffnungen 38 in jedem Reaktionsgefäßträger 28 der Anzahl an Reaktionsgefäßen 34 in jeder Reihe 36 von Reaktionsgefäßen 34 entspricht. Die Reaktionsgefäße 34 sind in nachfolgend detaillierter beschriebener Art und Weise im Bereich ihrer unteren Enden in die Öffnungen 38 eingesteckt und an den jeweiligen Reaktionsgefäßträgern 28 gehalten.

In der untersten Positionierebene III ist eine sogenannte Mikrotiterplatte 40 mit einer Vielzahl an Auffanggefäßen 42 angeordnet. Die Auffanggefäße 42 sind wiederum in einzelnen Reihen angeordnet, wobei die Anzahl der Auffanggefäße 42 in jeder Reihe der Anzahl an Reaktionsgefäßen 34 in jeder Reihe 36 entspricht und die Anzahl an Reihen von Auffanggefäßen 42 in der Mikrotiterplatte 40 der Anzahl an Reihen 36 von Reaktionsgefäßen in dem Reaktionsgefäßschlitten entspricht.

Unter dem Träger 12 ist eine Auffangwanne 44 angeordnet, welche zum Auffangen von aus Reaktionsgefäßen 34 abgegebenen Reagenzien oder dergleichen dient. In den Fig. 1 und 2 ist die Auffangwanne 44 in gestrichelter Linie dargestellt. Selbstverständlich ist es möglich, die Auffangwanne 44 auch oberhalb der Bodenplatte 18 zwischen den einzelnen Vertikalstreben 14 zu positionieren.

Bei der erfindungsgemäßen Vorrichtung 10 ist ferner ein Reagenzien-Eingabe/Entnahme-Mittel 46 vorgesehen. Das Reagenzien-Eingabe/Entnahme-Mittel 46 ist beispeilsweise durch ein an sich bekanntes Dispenser-Werkzeug 46 gebildet, das einerseits in Richtung des Pfeils F auf- und abbewegbar ist, das andererseits in Richtung von Pfeilen P und S in Fig. 1 in Längsrichtung des Trägers 12 hin- und herbewegbar ist.

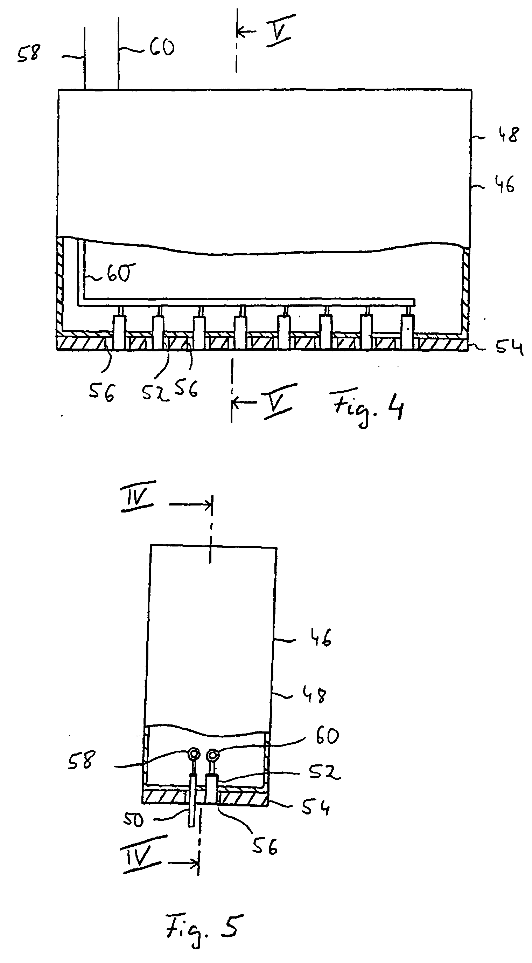

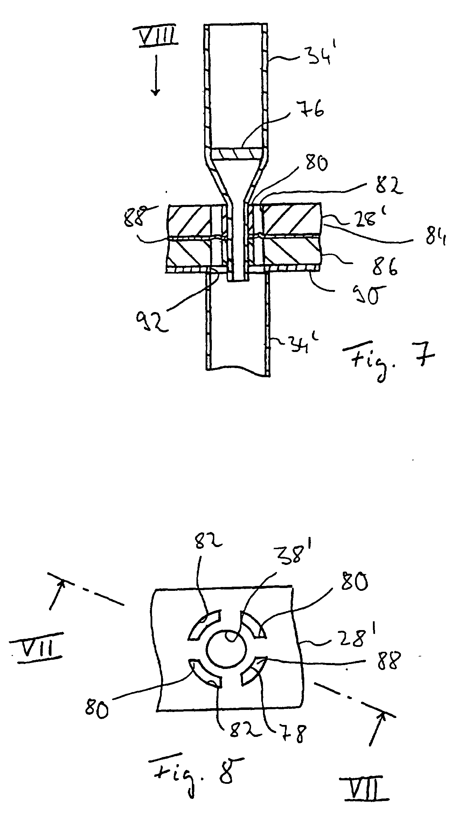

Das Dispenser-Werkzeug 46 ist in den Fig. 4 und 5 detaillierter gezeigt. Es umfaßt einen Körper 48, der an seiner Unterseite eine Reihe von Reagenzien-Abgabekanälen 50 sowie eine Reihe von Druck-Abgabekanälen 52 aufweist. Die Reagenzien-Abgabekanäle 50 und die Druck-Abgabekanäle 52 sind jeweils zur Unterseite des Körpers 48 hin offen und erstrecken sich aus dem Körper 48 heraus. Ferner ist es an der Unterseite des Körpers 48 eine Dichtungsmateriallage 54 vorgesehen, in welcher im Bereich der Kanäle 50, 52 jeweils Öffnungen 56 ausgebildet sind, in welche die Kanäle 50, 52 ragen bzw. diese durchsetzen. Die Anzahl der Kanäle 50, 52 in jeder Reihe entspricht der Anzahl an Reaktionsgefäßen 34 in jeder Reihe 36 von Reaktionsgefäßen 34. D. h., durch das Dispenser-Werkzeug 46 können Reagenzien gleichzeitig in alle Reaktionsgefäße 34 einer Reihe 36 über die Reagenzien-Abgabekanäle 50 eingeleitet werden. Ferner können über die Druck-Abgabekanäle 52 gleichzeitig alle Reaktionsgefäße 34 einer Reihe 36 mit Druck beaufschlagt werden, wie nachfolgend detailliert beschrieben.

Das Dispenser-Werkzeug 46 steht über eine Leitung 60 in Verbindung mit einer Druckquelle, z. B. Luftdruckquelle, so daß bei Aufschalten eines entsprechenden, in den Figuren nicht dargestellten Ventils über die Druck-Abgabekanäle 52 Druck in die Reaktionsgefäße 34 abgegeben werden kann. Ferner steht das Dispenser-Werkzeug 46 über eine Leitung 58 in Verbindung mit einer Quelle für Reagenzien, d. h. Reaktionslösungen oder dergleichen. Die Leitung 58 kann beispielsweise über ein Wechseloder Drehventil in Verbindung mit verschiedenen Fluidquellen gebracht werden, so daß bei Aufschalten des Ventils das Fluid von einer bestimmten Quelle über die Leitung 58 zu den Reagenzien-Abgabekanälen 50 strömen kann und über diese in die Reaktionsgefäße abgegeben werden kann. Vorratsbehälter für die zuzuführenden Reagenzien könnten in platzsparender Art und Weise in der untersten Positionierebene dort gelagert werden, wo keine Mikrotiterplatten oder dergleichen angeordnet sind und der Betrieb nicht beeinträchtigt ist. Die Ausgestaltung derartiger Fluidquellen bzw. die Zuführung des Fluids zu den einzelnen Reagenzien-Abgabekanälen ist im Stand der Technik bekannt, so daß eine detailliertere Beschreibung hier weggelassen werden kann.

Wie in Fig. 5 zu erkennen ist, sind die Reagenzien-Abgabekanäle 50 und die Druck-Abgabekanäle 52 in ihrer Länge und in ihrer Querschnittsabmessung verschieden ausgestaltet. Die Reagenzien-Abgabekanäle 50 sind relativ dünn und lang ausgebildet, wogegen die Druck-Abgabekanäle 52 kurz ausgebildet sind, so daß sie über die Dichtungsmateriallage 54 im wesentlichen nicht hervorstehen, jedoch einen größeren Querschnitt aufweisen. Dies hat den Zweck, daß vermittels der relativ langen Reagenzien-Abgabekanäle 50 diese relativ weit in die einzelnen Reaktionsgefäße 34 eintauchen und somit die Reagenzien bereits mit Abstand zum Oberrand der Reaktionsgefäße 34 aus dem Dispenser-Werkzeug 46 austreten. Dies trägt bereits dazu bei, eine Abgabe von Reagenzien in die Umgebung, d. h. in einen Bereich außerhalb der Reaktionsgefäße 34, zu vermeiden. Die spezielle Ausgestaltung der Druck-Abgabekanäle 52 ist derart gewählt, daß sie bei einer nachfolgend detaillierter beschriebenen Beaufschlagung der Reaktionsgefäße 34 mit Druck aufgrund ihres relativ großen Strömungsquerschnitts die schnelle Einleitung eines großen Gasvolumens und eine dementsprechend schnelle Druckerzeugung ermöglichen, aufgrund ihrer Kürze jedoch den Gaseintritt in die Reaktionsgefäße nahe an deren Oberende ermöglichen, so daß durch eintretendes Gas Flüssigkeit, die im unteren Bereich der Reaktionsgefäße 34 angesammelt ist, nicht aufgespült wird und somit keine Tropfen oder Aerosole erzeugt werden, die aus den Reaktionsgefäßen austreten könnten.

In Fig. 6 ist eine erste Ausgestaltungsform für die Reaktionsgefäße 34 der erfindungsgemäßen Vorrichtung dargestellt. Wie in Fig. 6 zu erkennen, sind die Reaktionsgefäße 34 einer Reihe 36 jeweils durch Stegabschnitte 62 integral miteinander verbunden, so daß jede Reihe 36 von Reaktionsgefäßen 34 eine im wesentlichen starre integrale Reihe bildet, die in entsprechende Öffnungen 38 der Reaktionsgefäßträger 28 eingeschoben werden kann. Wie in Fig. 6 zu erkennen, sind dabei im Bereich von Austrittsenden 64 der Reaktionsgefäße 34 die Reaktionsgefäße 34 sich konisch verjüngend ausgebildet, und die Öffnungen 38 im Reaktionsgefäßträger 28 sind in entsprechender Weise sich konisch verjüngend ausgebildet, so daß die Reaktionsgefäße 34 im Reaktionsgefäßträger 28 zentriert gehalten sind. Dies ist jedoch lediglich eine Ausgestaltungsart; es sind viele andere Ausgestaltungen möglich, um die Reaktionsgefäße 34 am Reaktionsgefäßträger 28 zu halten. So ist es beispielsweise möglich, einen die Austrittsenden 64 der Reaktionsgefäße 34 umgebenden Randabschnitt von im wesentlichen zylindrischer Form vorzusehen, der dann in entsprechend geformte Öffnungen des Reaktionsgefäßträgers 38 eingeschoben wird. Ferner können die Reaktionsgefäße 34 durch Haftmittel oder dergleichen zu den Reaktionsgefäßträgern gehalten werden.

Die Reaktionsgefäße 34 sind im Bereich ihrer Austrittsenden 64 nach Art einer Kanüle spitz ausgebildet. Mit diesen spitzen Enden können die Reaktionsgefäße 34 im Verlauf eines nachfolgend beschriebenen Reagenzientransfers aus diesen in die Reaktionsgefäße 34 einer darunter angeordneten Positionierebene eine Membran 70 durchstechen, welche an der Oberseite dieser darunterliegenden Reaktionsgefäße 34 angeordnet ist. Durch die die Membran 70 durchdringenden Spitzen der oberen Reihe 36 von Reaktionsgefäßen 34 und die Membran 70 wird eine fluiddichte Verbindung zum Reagenzientransfer zwischen den beiden Positionierebenen geschaffen. Dies hat zur Folge, daß beim Reagenzientransfer kein Material in unbeabsichtigter Weise aus den unteren Reaktionsgefäßen 34 entweichen kann. Um jedoch einen Druckausgleich schaffen zu können, ist in jedem der Reaktionsgefäße 34 eine Kanüle 72 angeordnet. Wird von den oberen Reaktionsgefäßen 34 Fluid in die unteren Reaktionsgefäße 34 angleitet, so kann das aus den unteren Reaktionsgefäßen 34 verdrängte Gas über die Kanülen 72 der oberen Reaktionsgefäße 34 entweichen. Um dabei jedoch zu verhindern, daß durch entweichendes Gas Aerosole mitgeführt werden, ist in jeder der Kanülen 72 ein Aeorsolfilter 74 angeordnet, welcher lediglich den Durchtritt von Gas gestattet, die im Gas mitgeführten Schwebeteilchen jedoch bindet und somit wiederum die Kontamination der Umgebung durch in dem entweichenden Gas mitgeführte Schwebeteilchen zu verhindern.

Ferner ist in jedem der Reaktionsgefäße 34 ein nachfolgend detaillierter beschriebener Filter 76 angeordnet. Dieser Filter 76 kann mehrere Funktionen haben. Einerseits dient er dazu, den ungewünschten Durchtritt von Fluid durch ein Reaktionsgefäß 34 zu verhindern. D. h., es soll lediglich dann, wenn das Innere der Reaktionsgefäße 34 mit Druck beaufschlagt wird, der Durchtritt von Fluid gestattet sein. Darüber hinaus kann jedoch der Filter 76 dazu dienen, eine gewünschte Reaktion hervorzurufen, wie später beschrieben.

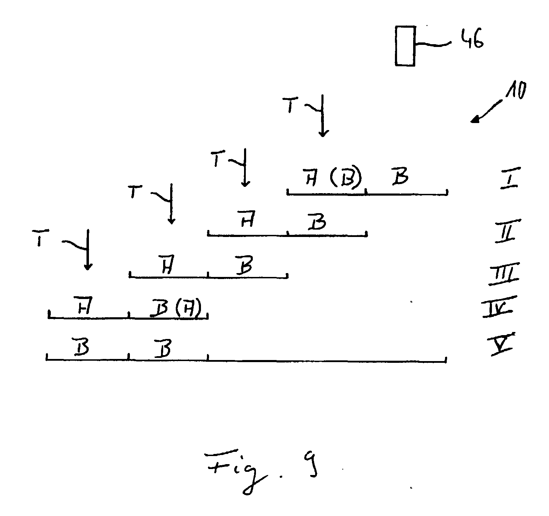

In Fig. 7 ist eine alternative Ausgestaltungsform der Reaktionsgefäße 34' dargestellt. Die Reaktionsgefäße 34' in Fig. 7 sind in eine entsprechende Aufnahmeöffnung 38' der Reaktionsgefäßträger 28' eingepaßt (siehe Fig. 8). Die Öffnung 38' ist dabei an einem ringartigen Trägersegment 78 ausgebildet, das durch Wandungsabschnitte 80 mit dem Reaktionsgefäßträger 28' fest verbunden ist. Zwischen den Wandungsabschnitten 80 sind einzelne Kanalabschnitte 82 gebildet, welche jeweils wieder Ent/Belüftungskanäle vorsehen.

Wie insbesondere in Fig. 7 zu erkennen ist, ist der Reaktionsgefäßträger 28' durch zwei Plattenteile 84, 86 gebildet, die unter Zwischenlagerung einer Aerosolfilterlage 88 miteinander verbunden sind. Die Aerosolfilterlage 88 ist im Bereich der Öffnungen 38' ausgeschnitten, bildet jedoch im Bereich der kanalartigen Öffnungen 82 einen Filter in diesen Öffnungen 82, der bei Entweichen von Gas aus den unteren Reaktionsgefäßen 34' in dem Gas mitgeführte Schwebeteilchen zurückhält.

An der Unterseite des Reaktionsgefäßträgers 28 ist wiederum eine Dichtungsmateriallage 90 angeordnet, die im Bereich der Öffnungen 38' und der Kanäle 82 eine entsprechende Öffnung 92 aufweist. Bei einem nachfolgend detaillierter beschriebenen Absenken des Reaktionsgefäßträgers 28' kommt die Dichtungsmateriallage in Anlage an den unteren Reaktionsgefäßträgern 34' und bildet mit diesen eine fluiddichte Verbindung. Bei Einleiten von Fluid aus den oberen Reaktionsgefäßen 34' in die unteren Reaktionsgefäße 34' kann verdrängtes Gas durch die Kanäle 82 über den Filter 88 entweichen.

Auch bei der Ausgestaltungsform gemäß Fig. 7 ist es möglich, an der Oberseite der Reaktionsgefäße 34' Membranen vorzusehen, die ein ungewolltes Entweichen von Aerosolen oder dergleichen verhindern. In diesem Falle müßten die unteren Enden der Reaktionsgefäße 34' wiederum spitz ausgebildet sein, und die Membranen müßten aus einem Material bestehen, das für Gas durchlässig ist, Aerosole oder dergleichen jedoch zurückhält. Auch bei der Ausgestaltung gemäß Fig. 6 ist die Verwendung eines derartigen Membranmaterials denkbar; ist das Membranmaterial für Gas durchlässig, so könnte beispielsweise auf die Kanüle 72 in den einzelnen Reaktionsgefäßen 34 verzichtet werden, da die Gasableitung aus den unteren Reaktionsgefäßen 34 über die Membran hinweg stattfindet. Das Vorsehen von Membranen an den oberen Enden der Reaktionsgefäße hat den Vorteil, daß selbst bei Verwendung von Dichtungsmateriallagen zum dichten Abschluß zur Umgebung hin eine Kontamination des Reaktionsgefäßträgers der oberen Reaktionsgefäße vermieden werden kann.

Nachfolgend wird die prinzipielle Funktionsweise der erfindungsgemäßen Vorrichtung 10 beschrieben. Durch das Dispenser-Werkzeug 46 wird zunächst ein Reaktionsmittel, d. h. Reagenzien, in die Reaktionsgefäße 34 des Reaktionsgefäßschlitten 20 in der Positionierebene I eingegeben. Dies wird derart vorgenommen, daß das in Fig. 1 dargestellte Dispenser-Werkzeug 46 zunächst in Richtung eines Pfeils S über eine Reihe 36 von Reaktionsgefäßen 34 in der Positionierebene I bewegt wird. Liegt das Dispenser-Werkzeug 46 über einer derartigen Reihe 36, so wird es in Richtung des Pfeils F abgesenkt, bis es mit seiner Dichtungsmateriallage 54 am oberen Ende der Reaktionsgefäße 34 anstößt und somit eine fluiddichte Verbindung herstellt, wie dies beispielsweise auch mit Bezug auf die Fig. 7 erkennbar ist. Alternativ ist es jedoch auch möglich, daß die Reagenzien-Abgabekanäle 50 des Dispenser-Werkzeugs 46 an ihren unteren Enden spitz ausgebildet sind, so daß sie eine an den oberen Enden der Reaktionsgefäße angeordnete Membran, wie diese in Fig. 6 dargestellt ist, durchdringen können und somit die fluiddichte Verbindung schaffen. Entsprechendes gilt für die Druck-Abgabekanäle 52.

Nach dem Absenken des Dispenser-Werkzeugs 46 auf die Reaktionsgefäße 34 wird über die Reagenzien-Abgabekanäle 50 ein gewünschtes Reaktionsmittel in die Reaktionsgefäße 34 einer Reihe 36 in der Positionierebene I eingeleitet. Ist dieser Vorgang beendet, so wird das Dispenser-Werkzeug 46 wieder angehoben und schrittweise zur nächsten Reihe 36 in der Positionierebene I weiterbewegt. Dieser Vorgang wird wiederholt, bis alle Reaktionsgefäße 34, d. h. alle für eine bestimmte Reaktion vorgesehenen Reaktionsgefäße 34, in der Positionierebene I mit dem jeweils gewünschten Reaktionsmittel gefüllt sind. Zu diesem Zwecke ist es selbstverständlich auch möglich, daß das Dispenser-Werkzeug 46 mehrere hintereinander angeordnete Reihen von Reagenzien-Abgabekanälen 50 und entsprechende Reihen von Druck-Abgabekanälen 52 aufweist, so daß gleichzeitig mehrere Reihen 36 von Reaktionsgefäßen 34 befüllt werden können.

Soll nun ein Fluid von den Reaktionsgefäßen 34 in der Positionierebene I auf die Reaktionsgefäße 34 in der Positionierebene II übertragen werden, so wird zunächst der Reaktionsgefäßschlitten 22 in der Positionierebene II in den Positionierbereich b verschoben. Dies wird dadurch vorgenommen, daß das Dispenser-Werkzeug 46 in Richtung eines Pfeils P über den Reaktionsgefäßschlitten 22 bewegt wird, dann in Richtung des Pfeils F abgesenkt wird, bis es auf den Reaktionsgefäßen 34 der Positionierebene II aufsetzt und dann wieder in Richtung des Pfeils S zurückverschoben wird und dabei den Reaktionsgefäßschlitten 22 mitnimmt. Der Reaktionsgefäßschlitten 22 wird somit in den Positionierbereich b verschoben. In entsprechender Weise wird nachfolgend der Reaktionsgefäßschlitten 20 durch das Dispenser-Werkzeug 46 von dem Positionierbereich c in den Positionierbereich b verschoben. Der Positionierbereich b bildet also bei der Darstellung der Fig. 1 einen Transfer-Positionierbereich I, in dem die Reaktionsgefäße 34 der Positionierebene I über den Reaktionsgefäßen 34 der Positionierebene II liegen. Insbesondere ist bei der dargestellten Ausführungsform eine 1 : 1-Zuordnung an Reaktionsgefäßen getroffen, d. h. für jede Reaktionsgefäßreihe 36 der Positionierebene I ist eine Reaktionsgefäßreihe 36 der Positionierebene II mit einer entsprechenden Anzahl an Reaktionsgefäßen 34 vorgesehen.

Zur Übertragung von Flüssigkeit aus den Reaktionsgefäßen der Positionierebene I in die Reaktionsgefäße der Positionierebene II wird das Dispenser-Werkzeug 46 wieder über einer Reihe 36 der Reaktionsgefäße der Positionierebene I angeordnet und in Richtung des Pfeils F abgesenkt, bis es wiederum auf die Reaktionsgefäße 34 aufsetzt. Das Dispenser-Werkzeug wird dann jedoch noch weiter abgesenkt, bis es in eine in der linken Hälfte der Fig. 2 dargestellte Stellung bewegt ist. In dieser Stellung drückt das Dispenser-Werkzeug 46 die Reaktionsgefäße 34 gegen die Vorspannkraft der elastischen Elemente 30 nach unten. Je nach Ausgestaltung der Reaktionsgefäße, bzw. des Reaktionsgefäßträgers, taucht nun entweder ein spitzes Ende 64 der Reaktionsgefäße 34 unter Durchdringung der Membran 70 (Fig. 6) in die darunterliegenden Reaktionsgefäße 34 ein, oder es kommt die Dichtungsmateriallage 90 des Reaktionsgefäßträgers 28' (Fig. 7) an der Oberseite der Reaktionsgefäße 34' der Positionierebene II zu liegen, so daß in jedem Falle eine fluiddichte Verbindung zwischen den Reaktionsgefäßen 34 bzw. 34' der beiden Positionierebenen I und II geschaffen ist. Die mit dem Stegabschnitt 62 verbundenen Reaktionsgefäße 34 sehen in jeder Reihe von Reaktionsgefäßen eine besonders stabile Anordnung der Reaktionsgefäße vor, welche insbesondere bei der Druckausübung mittels des Dispenser-Werkzeugs einen sicheren Betrieb der erfindungsgemäßen Vorrichtung gewährleistet.

Es sei hier jedoch erwähnt, daß die Erzeugung einer derartigen fluiddichten Verbindung nicht zwingend ist, insbesondere bei verschiedenen Reaktionen nicht erforderlich ist. Stattdessen ist es möglich, die Reaktionsgefäße so wie in Fig. 2 dargestellt auszubilden, daß sie mit einem Abgabeabschnitt ohne Bildung eines fluiddichten Abschlusses in die darunterliegenden Reaktionsgefäße eintauchen und die Flüssigkeit mit Abstand zum Oberrand der Reaktionsgefäße der unteren Positionierebene in diese einspritzen, so daß auch somit das unbeabsichtigte Abgeben von Reagenzien zur Umgebung hin weitgehend unterbunden werden kann.

Zur Übertragung von Fluid bzw. Flüssigkeit zwischen den beiden Positionierebenen wird nun in dem in Fig. 2 links dargestellten abgesenkten Zustand des Dispenser-Werkzeugs 46 über die Druck-Abgabekanäle 50 ein erhöhter Luftdruck in den einzelnen Reaktionsgefäßen der Positionierebene I erzeugt, so daß in diesen Reaktionsgefäßen enthaltenes Fluid durch die Filter 76 hindurchgedrückt wird und somit zu den darunterliegenden Reaktionsgefäßen abgegeben wird. Nach Beendigung dieser Übertragung wird das Dispenser-Werkzeug 46 wieder angehoben, über die nächste Reihe 36 von Reaktionsgefäßen 34 in der Positionierebene I bewegt, in Richtung des Pfeils F wieder abgesenkt und der Vorgang der Druckübertragung wiederholt. Ist die Flüssigkeit aus allen Reihen 36 in der Positionierebene I abgegeben, so kann, wie bereits vorangehend beschrieben, der Reaktionsgefäßschlitten 20 der Positionierebene I wieder in den Positionierbereich c zurückverschoben werden, so daß nun der Reaktionsgefäßschlitten 22 der Positionierebene II von oben her für das Dispenser-Werkzeug 46 frei zugänglich ist und beispielsweise, wie vorangehend beschrieben, vermittels des Dispenser-Werkzeug 46 wieder in den Positionierbereich a verschoben werden kann. In diesem Zustand kann dann vermittels des Dispenser-Werkzeugs 46 in die Reaktionsgefäße 34 des Reaktionsgefäßschlittens 22 wieder ein Reaktionsmittel eingegeben werden, um erneut eine Reaktion durchzuführen, oder es kann, durch eine entsprechende Druckbeaufschlagung, wie sie vorangehend zur Reagenzienübertragung zwischen den Positionierebenen I und II beschrieben worden ist, durchgeführt werden, um in den Reaktionsgefäßen 34 des Reaktionsgefäßschlittens 22 enthaltene Flüssigkeit in die Auffanggefäße 42 der Mikrotiterplatte 40 zu übertragen. Die Positionierebene III bildet dabei also eine Auffangebene, in welcher die Reaktionserzeugnisse der letzten Reaktionsstufe in der Mikrotiterplatte 40 aufgefangen werden und zur nachfolgenden Analyse oder dergleichen bereitgestellt sind. Es sei hier erwähnt, daß die Mikrotiterplatte 40 ebenso in der Positionierebene III im Positionierbereich b angeordnet sein könnte. Bei verschiedenen Reaktionen wäre dann eine Verschiebung des Reaktionsgefäßträgers 22 zwischen den Positionierbereichen a und b nicht erforderlich.

Zur Verschiebung der Reaktionsgefäßträger 28 in Richtung F können die elastischen Elemente 30 auch derart ausgebildet sein, daß sie diese Verschiebung aktiv bewirken. Beispielsweise kann vorgesehen sein, daß die elastischen Elemente 30 schlauchartig ausgebildet sind und mit einer Vakuumpumpe verbunden sind, so daß bei Evakuierung der schlauchartigen Elemente 30 diese sich zusammenziehen und somit die Reaktionsgefäßträger 28 in die in Fig. 2 links oben gezeigte Stellung bringen.

Mit der erfindungsgemäßen Vorrichtung 10 ist es ferner möglich, Nebenprodukte oder Abfallprodukte, die in den verschiedenen Reaktionsstufen entstehen können, in die Auffangwanne 44 und nicht in darunterliegende Reaktionsgefäße abzugeben. Dieses Abgeben kann in entsprechender Weise durch Druckbeaufschlagung der Reaktionsgefäße vermittels des Dispenser-Werkzeugs 46 hervorgerufen werden, wobei jedoch dann die entsprechenden Reaktionsgefäße, bzw. der diese tragende Reaktionsgefäßschlitten derart zu positionieren sind/ist, daß bei der Druckbeaufschlagung und der dadurch erzeugten Flüssigkeitsabgabe die Flüssigkeit 2 in die Auffangwanne 44 tropfen kann, ohne dabei auf einen darunter angeordneten Reaktionsgefäßschlitten zu treffen. Dabei ist es insbesondere vorteilhaft, wenn die Reaktionsgefäße derart ausgebildet sind, daß sie an ihren oberen Enden die Membranen tragen (siehe Fig. 6), da dann bei einem Herabtropfen von Reagenzien aus einem weiter oben angeordneten Reaktionsgefäßschlitten ein unbeabsichtigtes Eintreten derartiger Reagenzien in die Reaktionsgefäße eines weiter unten angeordneten Reaktionsgefäßschlittens verhindert wird. Auch verhindern derartige Membranen jegliche ungewollte Kontamination des Innenraums der entsprechenden Reaktionsgefäße.

Mit der erfindungsgemäßen Vorrichtung 10 ist es ebenso möglich, vermittels des Dispenser-Werkzeugs 46 oder eines entsprechend ausgestalteten Werkzeugs Reaktionsmittel aus Reaktionsgefäßen irgendeiner Positionierebene zu entnehmen und in die Reaktionsgefäße einer anderen Positionierebene zu transferieren. Ferner ist es möglich, die Anzahl an Reaktionsgefäßen in den verschiedenen Positionierebenen verschieden auszugestalten. So könnte beispielsweise, je nach Art der Reaktion, in der Positionierebene I lediglich eine einzige Reihe 36 von Reaktionsgefäßen 34 vorgesehen werden und diese nachfolgend schrittweise über den Reaktionsgefäßschlitten 22 der Positionierebene II, d. h. die in diesem getragenen Reaktionsgefäßreihen 36, zur Übertragung von Flüssigkeit in der vorangehend beschriebenen Art und Weise bewegt werden. Ein wichtiges Merkmal ist jedoch, daß zur Verarbeitung einzelner Reagenzien jeweils einzelne Reaktionskanäle durch die verschiedenen Positionierebenen hindurch bereitgestellt sind, so daß die vorangehend mit Bezug auf den Stand der Technik beschriebene Gefahr der Verschleppung von Reaktionerzeugnissen eines Reaktionskanals in einen benachbarten Reaktionskanal vermieden werden kann.

Es sei hier ferner darauf verwiesen, daß die vorangehend beschriebene Druckübertragung zwischen den einzelnen Positionierebenen nicht notwendigerweise durch Beaufschlagung mit einem Gasdruck erzeugt werden muß, vielmehr ist es auch möglich, durch entsprechende Druckzufuhr von Reagenzien, d. h. flüssigen Reagenzien, einen Überdruck in den einzelnen Reaktionsgefäßen zu erzeugen, welcher zur Überwindung der Filter 76 und zur dementsprechenden Abgabe von Reagenzien, d. h. Flüssigkeit, führt. Ferner ist es möglich, die Übertragung durch andere Einwirkung zu erzeugen. So kann beispielsweise die Übertragung auch durch elektrische oder magnetische Felder angetrieben werden und in beliebigen Richtungen durchgeführt werden, d. h. kann von oben nach unten und von unten nach oben durchgeführt werden. Auch können die Filter 76 derart ausgebildet sein, daß allein die Gravitationswirkung eine Übertragung bewirkt. Dies ist beispielsweise bei dementsprechend poröser und dicker Ausgestaltung der Filter 76 möglich, so daß eine Flüssigkeit eine vorbestimmte Zeitdauer benötigt, um den jeweiligen Filter zu durchdringen.

Es kann bei der erfindungsgemäßen Vorrichtung ferner vorgesehen sein, daß mittels Absenken des Dispenser-Werkzeugs 46 auf die Reaktionsgefäße 34 der Positionierebene I einerseits diese Reaktionsgefäße mit dem zugeordneten Reaktionsgefäßträger 28 abgesenkt werden, andererseits gleichzeitig Reaktionsgefäße, die unmittelbar darunter in der Positionierebene II angeordnet sind, abgesenkt werden. Dies kann beispielsweise dadurch erreicht werden, daß der Hubbereich des Reaktionsgefäßträgers 28 in der Positionierebene I mindestens doppelt so groß ist wie derjenige des Reaktionsgefäßträgers in der Positionierebene II. Werden die Reaktionsgefäße in der Positionierebene II dann abgesenkt, kommt der Reaktionsgefäßträger 28 derselben zur Anlage an den Reaktionsgefäßen der darunterliegenden Positionierebene II, bewegt sich jedoch weiter und schiebt somit die darunterliegenden Reaktionsgefäße zusammen mit ihrem zugehörigen Reaktionsgefäßträger nach unten, so daß diese in entsprechender Weise in die Reaktionsgefäße bzw. Auffanggefäße der Positionierebene III eintauchen.

Die Filter können beispielsweise durch aus mehreren Lagen aufgebaute Filter bestehen oder sie können aus mehrlagigen oder einlagigen Glasfaserfiltern bestehen. Die Auswahl der Filter hängt jeweils von der Art der in einem bestimmten Reaktionsgefäß, d. h. in einer bestimmten Positionierebene, durchzuführenden Reaktion ab.

Es wird darauf hingewiesen, daß die Anzahl der Reaktionsgefäße in jeder Positionierebene bzw. jeder Reihe an die speziellen Anforderungen angepaßt werden kann. So ist es möglich, daß in jeder Positionierebene oder jeder Reihe auch nur ein einziges Reaktionsgefäß angeordnet werden kann, das in seiner Größe dann auf den gewünschten Reaktionsertrag abgestimmt ist.

In Fig. 9 ist eine Prinzipskizze einer erfindungsgemäßen Vorrichtung 10 dargestellt, welche fünf Positionierebenen I-V umfaßt. Jede der Positionierebenen I-V weist zwei Positionierbereiche A, B auf. Die Positionierbereiche B in den verschiedenen Positionierebenen 10 bilden dabei jeweils Aufnahme-Positionierbereiche, wogegen die Positionierbereiche A jeweils Abgabe-Positionierbereiche bilden. Wie in Fig. 9 zu erkennen, ist unter jedem Abgabe-Positionieribereich A einer Positionierebene ein Aufnahme-Positionierbereich B an der darunterliegenden Positionierebene angeordnet. Es ergibt sich dabei eine stufenartige Anordnung der Positionierbereiche der verschiedenen Positionierebenen, bei der dann die Abgabe-Positionierbereiche der verschiedenen Positionierebenen jeweils von oben her frei zugänglich sind, um in jede Positionierebene I-IV vermittels des Dispenser-Werkzeugs 46 in der vorangehend beschriebenen Art und Weise Reagenzien oder Druck in die jeweils dort angeordneten Reaktionsgefäße einleiten zu können und vermittels des Dispenser-Werkzeugs 46 die Reaktionsgefäßschlitten in den einzelnen Positionierebenen I-IV frei verschieben zu können.

Die unmittelbar aufeinanderfolgenden Positionierbereiche A und B aufeinanderfolgender Positionierebenen bilden jeweils einen Transfer-Positionierbereich T, in welchem Reagenzien zwischen den Reaktionsgefäßen der in diesen Positionierebenen und Positionierbereichen angeordneten Reaktionsgefäße übertragen werden können. Wie in Fig. 9 ferner angedeutet, ist es möglich, in der Positionierebene I den Abgabe-Positionierbereich A ebenfalls als Aufnahme-Positionierbereich B zu verwenden, d. h. das Dispenser-Werkzeug 46 zur Eingabe von Reagenzien in die Reaktionsgefäße der Positionierebene I über dem Positionierbereich A bzw. (B) zu positionieren. In entsprechender Weise kann in der Positionierebene V der Aufnahme-Positionierbereich B bzw. (A) gleichfalls als Abgabe-Positionierbereich zur Abgabe in die Reaktionsgefäße bzw. Auffanggefäße der Positionierebene V dienen. D. h., in diesem Falle hat die Positionierebene V zwei Aufnahme-Positionierbereiche B.

Bei der Darstellung gemäß Fig. 9 sind die einzelnen Positionierbereich A und B derart dargestellt, daß sie jeweils entweder zur Positionierung einer Mehrzahl von Reaktionsgefäßreihen dienen oder die Positionierung einzelner Reihen von Reaktionsgefäßen angeben. D. h., die Fig. 9 kann derart betrachtet werden, daß sie den Fall der Mindestanzahl an Reaktionsgefäßreihen wiedergibt, d. h. in jeder Positionierebene müssen mindestens zwei Positionierbereiche für jeweils eine Reaktionsgefäßreihe vorgesehen sein. Ferner muß vorgesehen sein, daß die Reaktionsgefäße einer Positionierebene derart positioniert werden können, daß zumindest eine Reaktionsgefäßreihe der darunterliegenden Positionierebene bzw. Ebenen zum freien Zugang durch das Dispenser-Werkzeug 46 freiliegt, um die Reaktionsgefäße der darunterliegenden Positionierebene bzw. Ebenen vermittels des Dispenser-Werkzeugs 46 bedienen bzw. verschieben zu können.

Nachfolgend wird die Anwendung der erfindungsgemäßen Vorrichtung, so wie sie in Fig. 1 und 2 dargestellt ist, zur Isolierung von Plasmid-DNA aus Bakterien beschrieben. Bei diesem Vorgang werden zunächst Bakterienpellets an einer Position außerhalb der Vorrichtung 10 durch geeignete Lösungsmittel behandelt, so daß eine vollständige Lyse dieser Proben stattfindet. Nach abgeschlossener Lyse und geeigneter Vorbehandlung werden diese Reaktionsansätze in die Reaktionsgefäße 34 der Positionierebene I übertragen. In diesen Reaktionsgefäßen sind die Filter 76 dann durch ein aus drei Schichten bestehendes Polypropylen-Filtermaterial mit abnehmender Porengröße gebildet. D. h., die oberste Filterschicht weist eine Porengröße von 210 µm auf, die mittlere Filterschicht weist eine Porengröße von 80 µm auf und die unterste Filterschicht weist eine Porengröße von 40 µm auf. Bei derartigen Filtern beginnt bei Einleitung der Flüssigkeit in die Reaktionsgefäße 34 der Positionierebene I die Flüssigkeit in die Filter 76 einzudringen, aufgrund der Abnahme der Porengröße wird jedoch die Kapillarbewegung gestoppt, so daß die Flßüssigkeit diese Filter nicht vollständig durchdringen kann. Die Verwendung derartiger Filter führt dazu, daß in dem lysierten Bakterienmaterial enthaltene Ausflockungen oder gallertartiges Material ausgefiltert werden. Darüber hinaus hat sich gezeigt, daß eben die Verwendung derartiger Filter die Auflockung derartigen Materials unterstützt, was zu einer deutlich besseren und leichter durchzuführenden Filtration führt.

Zur Übertragung der in den Reaktionsgefäßen 34 der Positionierebene I enthaltenen Flüssigkeit, d. h. zu der vorangehend beschriebenen Filtration, in die Reaktionsgefäße 34 der Positionierebene II wird der Reaktionsgefäßschlitten 20 der Positionierebene I in den Positionierbereich b verschoben, welcher für den Reaktionsgefäßschlitten 20 ein Abgabe-Positionierbereich ist. Vorher wurde bereits der Reaktionsgefäßschlitten 22 in der Positionierebene II ebenfalls in den Positionierbereich b verschoben, welcher für diesen Reaktionsgefäßschlitten 22 einen Aufnahme-Positionierbereich bildet. Durch Anlegen eines Drucks vermittels des Dispenser-Werkzeugs 46 wird, in der vorangehend beschriebenen Art und Weise, dann das in den Reaktionsgefäßen 34 in Positionierebene I enthaltene lysierte Bakterienmaterial durch die Filter 76 hindurchgefiltert und gefilterte Flüssigkeit in den Reaktionsgefäßen 34 der Positionierebene II aufgefangen.

In den Reaktionsgefäßen 34 der Positionierebene II ist das verwendete Mateial für die Filter 76 ein Glasfaser-Filtermaterial, an welchem das DNA-Material sich in an sich bekannter Weise ablagert. Die in den Reaktionsgefäßen 34 der Positionierebene II enthaltene Flüssigkeit wird nachfolgend nicht mehr benötigt und bildet somit Abfallmaterial. Dieses wird durch Druckbeaufschlagung der Reaktionsgefäße dieser Positionierebene durch die Filter 76 in dieser Positionierebene hindurch in die Auffangwanne 44 bei im Positionierbereich b angeordnetem Reaktionsgefäßschlitten 22 abgegeben. Nachfolgend wird wiederholt ein Reinigungsschritt durchgeführt, indem zunächst eine 70-80 %-ige Ethanollösung über das Dispenser-Werkzeug 46 in die Reaktionsgefäße 34 der Positionierebene II eingeleitet wird und dann durch Druckbeaufschlagung in die Auffangwanne 44 abgegeben wird. Nachfolgend wird durch Druckluftbeaufschlagung das Filtermaterial mit dem daran abgelagerten DNA-Material getrocknet. Es werden jeweils zwei derartige Reinigungs- bzw. Trocknungszyklen durchlaufen, bevor die nächste Probenserie behandelt wird. Dies führt zu einer längeren Trocknungsdauer, ohne daß eine Unterbrechung des Bearbeitungsvorgangs eingelegt werden muß.

Nach dem Trocknen wird der Reaktionsgefäßschlitten 22 in der Positionierebene II in den Positionierbereich a verschoben, so daß die Reaktionsgefäße 34 desselben jeweils über den Auffanggefäßen 42 der Mikrotiterplatte 40 in der Positionierebene III angeordnet sind. Es wird dann eine Elution des an dem Filtermaterial 76 der Positionierebene II abgelagerte DNA-Materails durch Zufuhr eines Lösungsmittels, beispielsweise Wasser, hervorgerufen. Durch dieses Lösungsmittel löst sich das DNA-Material von den Filtern ab und kann dann zusammen mit dem Lösungsmittel durch Druckbeaufschlagung vermittels des Dispenser-Werkzeugs 46 in die Auffanggefäße 42 in der Positionierebene III abgegeben werden. In diesen Auffanggefäßen 42 ist dann das zur weiteren Untersuchung verwendbare isolierte DNA-Material enthalten.

Mit der vorangehend beschriebenen erfindungsgemäßen Vorrichtung ist es möglich, eine Vielzahl verschiedenster chemischer oder biochemischer Reaktionen durchzuführen. Insbesondere ist die parallele Durchführung einer Vielzahl an Reaktionen in jeweils einzelnen Reaktionskanälen möglich. Je nach Auswahl der Anzahl an Reaktionsgefäßen bzw. Reaktionsgefäßreihen kann die Anzahl an einzelnen Reaktionskanälen an die gewünschten Erfordernisse angepaßt werden. Durch die Bewegbarkeit der Reaktionsgefäße in den einzelnen Positionierebenen zwischen verschiedenen Positionierbereichen ist eine Vielzahl verschiedener Übertragungsmöglichkeiten für Reagenzien zwischen verschiedenen Positionierebenen gegeben. Durch die erfindungsgemäße Vorrichtung wird daher selbst bei einer großen Anzahl an parallel durchzuführenden Reaktionsfolgen die dafür benötigte Zeit auch bei mehrstufigen Reaktionen deutlich verkürzen.

Durch die gestapelte Anordnung der verschiedenen Positionierebenen ist der für die erfindungsgemäße Vorrichtung in einem Labor zur Verfügung zu stellende Raum sehr klein. Ferner ist aufgrund der speziellen Ausgestaltung der erfindungsgemäßen Vorrichtung eine vollautomatische Durchführung von Reaktionsfolgen ohne die Intervention von Bedienungspersonal möglich. Die auf verschiedene Art erreichbare fluiddichte Verbindung zwischen Reaktionsgefäßen verschiedener Positionierebenen bzw. zwischen den Reagenzien-Eingabe/Entnahme-Mitteln und den Reaktionsgefäßen sieht einen Kontaminationsschutz vor, so daß die Abgabe von Reagenzien in die Umgebung, was zur Beeinträchtigung der Reaktionen benachbart angeordneter Reaktionskanälen führen könnte, vermieden wird.

Die Anzahl an Positionierebenen bzw. Positionierbereichen kann in gewünschter Art und Weise an jeweils verschiedene Reaktionserfordernisse angepaßt werden, so daß Reaktionen mit beliebiger Anzahl an Reaktionsschritten durchgeführt werden können. Mit der erfindungsgemäßen Vorrichtung ist es möglich, Reaktionen beispielsweise nicht nur in einer Abfolge von oben nach unten durchzuführen, sondern auch durch geeignete Auswahl des der Reagenzien-Eingabe/Entnahme-Mittel bzw. der einzelnen Reaktionsgefäße eine Übertragung von Flüssigkeit von weiter unten angeordneten Reaktionsgefäßen in weiter oben angeordnete Reaktionsgefäße zu erreichen.

## Patentansprüche

1. Vorrichtung (10) zur Durchführung chemischer Reaktionsfolgen, umfassend:
- einen Träger (12) mit wenigstens drei Positionierebenen (I-III), welche in einer Flußrichtung (F) aufeinanderfolgend im wesentlichen parallel zueinander angeordnet sind, wobei jede Positionierebene (I-III) eine Mehrzahl von im wesentlichen orthogonal zur Flußrichtung (F) nebeneinander liegenden Positionierbereichen (a, b, c) umfaßt und wobei zu wenigstens einem Positionierbereich (a, b, c) in einer der Positionierebenen (I-III) ein zu diesem in Flußrichtung (F) ausgerichteter Positionierbereich (a, b, c) in wenigstens einer unmittelbar benachbarten Positionierebene (I-III) vorhanden ist, wobei in jeder der wenigstens drei Positionierebenen (I-III) jeweils wenigstens ein Reaktionsgefäß (34) vorgesehen ist,
- in mindestens zwei der Positionierebenen (I, II, III) wenigstens einen Reaktionsgefäßschlitten (20, 22) mit wenigstens einem Reaktionsgefäß (34) dieser Positionierebene, wobei der Reaktionsgefäßschlitten (20, 22) nur in der zugeordneten Positionierebene (I, II) bewegbar ist, so daß das wenigstens eine Reaktionsgefäß (34) oder wenigstens ein Teil der an dem Reaktionsgefäßschlitten (20, 22) getragenen Reaktionsgefäße (34) in wenigstens einem Transfer-Positionierbereich (T) anordenbar ist, wobei jedem in dem wenigstens einen Transfer-Positionierbereich (T) angeordneten Reaktionsgefäß (34) ein Reaktionsgefäß einer unmittelbar benachbarten Positionierebene (I, II, III) zum wahlweisen Reagenzientransfer zwischen diesen Reaktionsgefäßen (34) zuordenbar ist.

2. Vorrichtung nach Anspruch 1, **dadurch gekennzeichnet, daß** der wenigstens eine Reaktionsgefäßschlitten (20, 22) wenigstens eine Reihe (36) von Reaktionsgefäßen (34) trägt, in der wenigstens ein Reaktionsgefäß angeordnet ist.

3. Vorrichtung nach Anspruch 2, **dadurch gekennzeichnet, daß** die wenigstens eine Reihe (36) von Reaktionsgefäßen (34) an dem wenigstens einen Reaktionsgefäßschlitten (20, 22) durch einen dieser Reihe (36) zugeordneten Reaktionsgefäßträger (28) getragen ist.

4. Vorrichtung nach einem der Ansprüche 1 bis 3, **dadurch gekennzeichnet, daß** jedes an dem wenigstens einen Reaktionsgefäßschlitten (20, 22) getragene Reaktionsgefäß (34) zum Reagenzientransfer zwischen diesem und einem jeweils zugeordneten Reaktionsgefäß (34) in einer unmittelbar benachbarten Positionierebene (II, III) in der Flußrichtung (F) auf das zugeordnete Reaktionsgefäß (34) der unmittelbar benachbarten Positionierebene (II, III) zu bewegbar ist.

5. Vorrichtung nach Anspruch 3 und Anspruch 4, **dadurch gekennzeichnet, daß** der die wenigstens eine Reihe (36) von Reaktionsgefäßen (36) tragende Reaktionsgefäßträger (28) an dem wenigstens einen Reaktionsgefäßschlitten (20, 22) in der Flußrichtung (F) hin- und herbewegbar angeordnet ist.

6. Vorrichtung nach Anspruch 5, ferner umfassend Bewegungsmittel (46) zum Bewirken der Hin- und Herbewegung des Reaktionsgefäßträgers (28).

7. Vorrichtung nach Anspruch 6, **dadurch gekennzeichnet, daß** die Bewegungsmittel (46) zum Ausüben einer Druckkraft auf jedes an dem Reaktionsgefäßträger (28) getragene Reaktionsgefäß (34) ausgebildet sind, wobei bei Ausüben der Druckkraft jedes Reaktionsgefäß (34) mit dem Reaktionsgefäßträger (28) gegen eine Vorspannkraft auf das jeweils zugeordnete Reaktionsgefäß (34) der unmittelbar benachbarten Positionierebene (II, III) zu bewegbar ist.

8. Vorrichtung nach Anspruch 7, **dadurch gekennzeichnet, daß** die Vorspannkraft durch zwischen dem wenigstens einen Reaktionsgefäßschlitten (20, 22) und dem Reaktionsgefäßträger (28) wirkende Vorspannmittel (30), vorzugsweise Federmittel, elastisch verformbare Kunststoffelemente (30) oder dergleichen, erzeugt wird.

9. Vorrichtung nach Anspruch 6, **dadurch gekennzeichnet, daß** die Bewegungsmittel zwischen dem wenigstens einen Reaktionsgefäßschlitten (20, 22) und dem Reaktionsgefäßträger (28) wirkende Verschiebungsmittel umfassen.

10. Vorrichtung nach einem der Ansprüche 4 bis 9, **dadurch gekennzeichnet, daß** Dichtungsmittel (64, 70; 90) vorgesehen sind, welche in einem aufeinanderzubewegten Zustand der Reaktionsgefäße (34; 34') zweier unmittelbar benachbarter Positionierebenen einen im wesentlichen fluiddichten Abschluß zwischen den einander jeweils zugeordneten Reaktionsgefäßen (34; 34') der verschiedenen Positionierebenen erzeugen.

11. Vorrichtung nach Anspruch 10, **dadurch gekennzeichnet, daß** die Dichtungsmittel (64, 70) ein im wesentlichen spitz ausgebildetes Austrittsende (64) des wenigstens einen Reaktionsgefäßes (34) einer Positionierebene umfassen sowie ein durch Membranmittel (70) abgeschlossenes Aufnahmeende des jeweils zugeordneten Reaktionsgefäßes (34) der anderen der Positionierebenen umfassen, wobei bei gegenseitigem Annähern der Reaktionsgefäße (34) der verschiedenen Positionierebenen die Membranmittel (70) durch die spitzen Austrittsenden (64) durchdringbar sind und mit diesen einen fluiddichten Abschluß bilden.

12. Vorrichtung nach Anspruch 5 und Anspruch 10, **dadurch gekennzeichnet, daß** die Dichtungsmittel (90) eine Dichtungsmateriallage (90) an einer Seite des Reaktionsgefäßträgers (28') umfassen, welche den zugeordneten Reaktionsgefäßen (34') der unmittelbar benachbarten Positionierebene zugewandt ist, wobei bei Bewegung des Reaktionsgefäßträgers (28') auf die Reaktionsgefäße (34') der unmittelbar benachbarten Positionierebene zu die Dichtungsmateriallage (90) an Aufnahmeenden der Reaktionsgefäße (34') der unmittelbar benachbarten Positionierebene zur Anlage kommt und mit diesen einen fluiddichten Abschluß bildet.

13. Vorrichtung nach einem der Ansprüche 10 bis 12, ferner umfassend Entlüftungsmittel (72; 82), welche bei fluiddichter Verbindung der Reaktionsgefäße (34; 34') zweier unmittelbar benachbarter Positionierebenen eine Belüftung bzw. Entlüftung der Reaktionsgefäße (34; 34') ermöglichen.

14. Vorrichtung nach Anspruch 13, **dadurch gekennzeichnet, daß** die Entlüftungsmittel (72) Entlüftungskanalmittel (72) umfassen, welche sich von den Austrittsenden (64) der Reaktionsgefäße (34), vorzugsweise innerhalb der jeweiligen Reaktionsgefäße (34), wegerstrecken, und vorzugsweise über Filtermittel (74) zur Umgebung hin offen sind.

15. Vorrichtung nach Anspruch 12 und Anspruch 13, **dadurch gekennzeichnet, daß** das wenigstens eine Reaktionsgefäß (34') an dem zugeordneten Reaktionsgefäßträger (28') im Bereich seines Austrittsendes getragen ist, und daß die Entlüftungsmittel (82) an dem Reaktionsgefäßträger (28') vorgesehene, diesen und die Dichtungsmateriallage (90) näherungsweise in der Flußrichtung (F) durchsetzende und das Austrittsende des wenigstens einen Reaktionsgefäßes (34') umgebende Entlüftungskanalmittel (82) umfassen, welche bei Anliegen des Reaktionsgefäßträgers (28') an den Aufnahmeenden des jeweils zugeordneten Reaktionsgefäßes (34') der unmittelbar benachbarten Positionierebene eine Gasströmungsverbindung zwischen dem Innenraum der zugeordneten Reaktionsgefäße (34') der unmittelbar benachbarten Positionierebene und der Umgebung herstellen, vorzugsweise über Filtermittel (88).

16. Vorrichtung nach einem der vorhergehenden Ansprüche, ferner umfassend Verschlußmittel (76), vorzugsweise Filtermittel (76), in dem wenigstens einen Reaktionsgefäß (34), vorzugsweise im Bereich des Austrittsendes (64), welche Verschlußmittel (76) einen Fluiddurchtritt nur bei externer Einwirkung ermöglichen.

17. Vorrichtung nach Anspruch 16, **dadurch gekennzeichnet, daß** die externe Einwirkung durch Anlegen eines Drucks oder eines Unterdrucks an das Innere der Reaktionsgefäße (34) oder durch elektrische, magnetische oder Gravitationseinwirkung erfolgt.

18. Vorrichtung nach einem der vorhergehenden Ansprüche, ferner umfassend Reagenzien-Eingabe/Entnahme-Mittel (46) zum Eingeben von Reagenzien in das wenigstens eine Reaktionsgefäß (34) in wenigstens einer der Positionierebenen (I-III) bzw. zum Entnehmen von Reagenzien aus dem wenigstens einen Reaktionsgefäß (34) von wenigstens einer der Positionierebenen (I-III).

19. Vorrichtung nach Anspruch 18, **dadurch gekennzeichnet, daß** die Reagenzien-Eingabe/Entnahme-Mittel (46) zur Eingabe/Entnahme von Reagenzien mit den jeweiligen Reaktionsgefäßen (34) fluiddicht (bei 54) verbindbar sind.

20. Vorrichtung nach Anspruch 18 oder 19, **dadurch gekennzeichnet, daß** jede Positionierebene (I-V) wenigstens einen Eingabe/Entnahme-Positionierbereich (A) umfaßt, wobei bei Positionierung wenigstens eines Teils der in einer Positionierebene (I-V) vorgesehenen Reaktionsgefäße in dem wenigstens einen Eingabe/Entnahme-Positionierbereich (A) diese Reaktionsgefäße für die Reagenzien-Eingabe/Entnahme-Mittel (46) zur Eingabe/Entnahme von Reagenzien in diese bzw. aus diesen in Flußrichtung (F) von einer Seite, vorzugsweise einer Oberseite, her frei zugänglich sind.

21. Vorrichtung nach Anspruch 7 und einem der Ansprüche 18 bis 20, **dadurch gekennzeichnet, daß** die Reagenzien-Eingabe/Entnahme-Mittel (46) die Bewegungsmittel (46) bilden.

22. Vorrichtung nach einem der vorhergehenden Ansprüche, **dadurch gekennzeichnet, daß** die Reaktionsgefäßschlitten (20, 22) in den jeweils zugeordneten Positionierebenen (I-III) linear bewegbar sind.

23. Vorrichtung nach einem der Ansprüche 1 bis 21, **dadurch gekennzeichnet, daß** die Reaktionsgefäßschlitten in den zugeordneten Positionierebenen auf näherungsweise kreisförmigen Bahnen bewegbar sind.

24. Vorrichtung nach einem der vorhergehenden Ansprüche, ferner umfassend Mittel (46) zum Bewirken der Bewegung der Reaktionsgefäßschlitten in den zugeordneten Positionierebenen.

25. Vorrichtung nach Anspruch 18 und nach Anspruch 24 und gewünschtenfalls einem weiteren der vorhergehenden Ansprüche, **dadurch gekennzeichnet, daß** die Reagenzien-Eingabe/Entnahme-Mittel (46) die Mittel (46) zum Bewirken der Bewegung der Reaktionsgefäßschlitten in den zugeordneten Positionierebenen bilden.

26. Vorrichtung nach einem der vorhergehenden Ansprüche, **dadurch gekennzeichnet, daß** das wenigstens eine Reaktionsgefäß (42) in einer der Positionierebenen (III), vorzugsweise der in der Flußrichtung letzten Positionierebene (III), ein Auffanggefäß (42) zur Aufnahme der bei der chemischen Reaktion erzeugten Reaktionserzeugnisse ist.

27. Vorrichtung nach einem der vorhergehenden Ansprüche, ferner umfassend Auffangwannenmittel (44) folgend auf die in der Flußrichtung letzte Positionierebene (III).

28. Vorrichtung nach einem der vorhergehenden Ansprüche, **dadurch gekennzeichnet, daß** wenigstens ein Teil der Positionierebenen (I-V) einen Aufnahme-Positionierbereich (B) und einen Abgabe-Positionierbereich (A) umfaßt, daß der Aufnahme-Positionierbereich (B) einer derartigen Positionierebene (I-V) in Flußrichtung mit dem Abgabe-Positionierbereich (A) einer in Flußrichtung (F) vorangehenden Positionierebene (I-IV) ausgerichtet ist, und/oder daß der Abgabe-Positionierbereich (A) einer derartigen Positionierebene (I-IV) in Flußrichtung (F) mit dem Aufnahme-Positionierbereich (B) einer in Flußrichtung (F) folgenden Positionierebene (II-V) ausgerichtet ist.

29. Vorrichtung nach Anspruch 28, **dadurch gekennzeichnet, daß** wenigstens die in Flußrichtung (F) erste Positionierebene (I) einen Aufnahme/Abgabe-Positionierbereich (A, (B) umfaßt, der sowohl den Aufnahme-Positionierbereich (B) als auch den Abgabe-Positionierbereich (A) bildet.

30. Vorrichtung nach Anspruch 28 oder 29, **dadurch gekennzeichnet, daß** die in Flußrichtung (F) letzte Positionierebene (V) lediglich Aufnahme-Positionierbereiche (B), vorzugsweise einen Aufnahme-Positionierbereich (B), umfaßt.

31. Vorrichtung nach einem der Ansprüche 28 bis 30, **dadurch gekennzeichnet, daß** die Positionierbereiche (A, B) der verschiedenen Positionierebenen (I-II) derart angeordnet sind, daß die Reaktionsgefäßschlitten in jeder Positionierebene (I-V) derart in ihren jeweiligen Positionierebenen (I-V) anordenbar sind, daß jeder Reaktionsgefäßschlitten in jeder anderen Positionierebene vorzugsweise vermittels Reagenzien-Eingabe/Entnahme-Mitteln (46) mit seinem/seinen zugeordneten Reaktionsgefäß/en in jedem der für diese Reaktionsgefäße vorgesehenen Positionierbereiche (A, B) anordenbar ist.

32. Vorrichtung nach Anspruch 31, **dadurch gekennzeichnet, daß** die Aufnahme- und Abgabe-Positionierbereiche (B, A) der verschiedenen Positionierebenen (I-V) in treppenförmiger Struktur angeordnet sind, wobei jeweils wenigstens ein Teil jedes Abgabe-Positionierbereichs (A) nicht durch einen Positionierbereich (A, B) einer in Flußrichtung (F) vorangehenden Positionierebene (I-IV) überdeckt ist.

33. Verfahren zur Durchführung chemischer Reaktionsfolgen, mit einer Vorrichtung nach einem der vorhergehenden Ansprüche, umfassend die folgenden Schritte:
a) Einbringen von Reagenzien in das wenigstens eine Reaktionsgefäß (34) einer ersten Positionierebene (I),
b) Durchführen einer chemischen Reaktion, einer Adsorptionsreaktion, einer Absorptionsreaktion einer Stoffmischung oder dergleichen in dem wenigstens einen Reaktionsgefäß (34),
c) Anordnen des wenigstens einen Reaktionsgefäßes (34) der ersten Positionierebene (I) und des jeweils zugeordneten Reaktionsgefäßes (34) einer auf die erste Positionierebene (I) unmittelbar folgenden zweiten Positionierebene (II) jeweils in einem Transfer-Positionierbereich (T) der beiden Positionierebenen (I, II),
d) gesteuertes Transferieren wenigstens eines Teils von im Schritt b) erhaltenen Reaktionserzeugnissen in ein jeweils zugeordnetes Reaktionsgefäß (34) der zweiten Positionierebene (II), wobei das wenigstens eine Reaktionsgefäß (34) der ersten Positionierebene (I) oder/und das jeweils zugeordnete Reaktionsgefäß (34) der zweiten Positionierebene (II) derart positionierbar sind, daß das wenigstens eine Reaktionsgefäß (34) in der zweiten Positionierebene (II) zur freien Eingabe von Reagenzien in dieses vermittels Reagenzien-Eingabe/Entnahme-Mitteln (46) frei zugänglich ist oder/und zur gesteuerten Übertragung der in diesem enthaltenen Reaktionserzeugnisse in ein jeweils zugeordnetes Reaktionsgefäß (42) einer auf die zweite Positionierebene (II) folgenden dritten Positionierebene (III) positioniert ist.

## Claims

1. An apparatus (10) for performing sequential chemical reactions, comprising:
- a support (12) having at least three positioning planes (I-III), which are arranged substantially parallel to one another in succession in a flow direction (F), wherein each positioning plane (I-III) comprises a plurality of positioning zones (a, b, c) located next to one another substantially orthogonally to the flow direction (F) and wherein, at at least one positioning zone (a, b, c) in one of the positioning planes (I-III) there is present a positioning zone (a, b, c) aligned therewith in the flow direction (F) in at least one directly adjacent positioning plane (I-III), wherein at least one reaction vessel (34) is provided in each of the at least three positioning planes (I-III),
- in at least two of the positioning planes (I, II, III) at least one reaction vessel carriage (20, 22) with at least one reaction vessel (34) of this positioning plane, wherein the reaction vessel carriage (20, 22) may only be moved in the assigned positioning plane (I, II), such that the at least one reaction vessel (34) or at least some of the reaction vessels (34) carried on the reaction vessel carriage (20, 22) may be arranged in at least one transfer positioning zone (T), wherein a reaction vessel of a directly adjacent positioning plane (I, II, III) may be assigned to each reaction vessel (34) arranged in the at least one transfer positioning zone (T) for reagent transfer as desired between these reaction vessels (34).

2. An apparatus according to claim 1, **characterised in that** the at least one reaction vessel carriage (20, 22) carries at least one row (36) of reaction vessels (34), in which there is arranged at least one reaction vessel.

3. An apparatus according to claim 2, **characterised in that** the at least one row (36) of reaction vessels (34) is carried on the at least one reaction vessel carriage (20, 22) by a reaction vessel support (28) assigned to this row (36).

4. An apparatus according to one of claims 1 to 3, **characterised in that** each reaction vessel (34) carried on the at least one reaction vessel carriage (20, 22) may be moved, for the purpose of reagent transfer between it and a respectively assigned reaction vessel (34) in a directly adjacent positioning plane (II, III), in the flow direction (F) towards the respectively assigned reaction vessel (34) of the directly adjacent positioning plane (II, III).

5. An apparatus according to claim 3 and claim 4, **characterised in that** the reaction vessel support (28) carrying the at least one row (36) of reaction vessels (36) is arranged on the at least one reaction vessel carriage (20, 22) so as to be movable to-and-fro in the flow direction (F).

6. An apparatus according to claim 5, further comprising movement means (46) for effecting the to-and-fro movement of the reaction vessel support (28).

7. An apparatus according to claim 6, **characterised in that** the movement means (46) are designed to exert a pressure force on each reaction vessel (34) carried on the reaction vessel support (28), wherein, upon exertion of the pressure force, each reaction vessel (34) may be moved with the reaction vessel support (28) against a pretensioning force towards the respectively assigned reaction vessel (34) of the directly adjacent positioning plane (II, III).

8. An apparatus according to claim 7, **characterised in that** the pretensioning force is generated by pretensioning means (30), preferably spring means, resiliently deformable plastics elements (30) or the like, acting between the at least one reaction vessel carriage (20, 22) and the reaction vessel support (28).

9. An apparatus according to claim 6, **characterised in that** the movement means comprise displacement means acting between the at least one reaction vessel carriage (20, 22) and the reaction vessel support (28).

10. An apparatus according to one of claims 4 to 9, **characterised in that** sealing means (64, 70; 90) are provided, which, when the reaction vessels (34; 34') of two directly adjacent positioning planes have been moved towards one another, produce a substantially fluid-tight seal between the respectively mutually assigned reaction vessels (34; 34') of the different positioning planes.

11. An apparatus according to claim 10, **characterised in that** the sealing means (64, 70) comprise a substantially pointed outlet end (64) of the at least one reaction vessel (34) of one positioning plane together with a receiving end, closed by membrane means (70), of the respectively assigned reaction vessel (34) of the other of the positioning planes, wherein, when the reaction vessels (34) of the different positioning planes are moved towards one another, the membrane means (70) may be penetrated by the pointed outlet ends (64) and form a fluid-tight seal therewith.

12. An apparatus according to claim 5 and claim 10, **characterised in that** the sealing means (90) comprise a layer (90) of sealing material on one side of the reaction vessel support (28'), which faces the assigned reaction vessels (34') of the directly adjacent positioning plane, wherein, on movement of the reaction vessel support (28') towards the reaction vessels (34') of the directly adjacent positioning plane, the sealing material layer (90) comes to rest against receiving ends of the reaction vessels (34') of the directly adjacent positioning plane and forms a fluid-tight seal therewith.

13. An apparatus according to one of claims 10 to 12, further comprising venting means (72; 82), which allow aeration or venting of the reaction vessels (34; 34') in the event of fluid-tight connection of the reaction vessels (34; 34') of two directly adjacent positioning planes.

14. An apparatus according to claim 13, **characterised in that** the venting means (72) comprise vent duct means (72), which extend away from the outlet ends (64) of the reaction vessels (34), preferably within the respective reaction vessels (34), and are open to the environment preferably via filter means (74).

15. An apparatus according to claim 12 and claim 13, **characterised in that** the at least one reaction vessel (34') is carried on the assigned reaction vessel support (28') in the area of its outlet end, and **in that** the venting means (82) comprise vent duct means (82) provided on the reaction vessel support (28'), passing through the latter and the sealing material layer (90) approximately in the flow direction (F) and surrounding the outlet end of the at least one reaction vessel (34'), which vent duct means (82) produce a gas flow connection between the inside of the assigned reaction vessels (34') of the directly adjacent positioning plane and the environment, preferably via filter means (88), when the reaction vessel support (28') rests against the receiving ends of the respectively assigned reaction vessel (34') of the directly adjacent positioning plane.

16. An apparatus according to one of the preceding claims, further comprising closure means (76), preferably filter means (76), in the at least one reaction vessel (34), preferably in the area of the outlet end (64), which closure means (76) allow fluid passage only when acted upon externally.

17. An apparatus according to claim 16, **characterised in that** the external action is achieved by applying a pressure or a vacuum to the inside of the reaction vessels (34) or by electrical, magnetic or gravitational action.

18. An apparatus according to one of the preceding claims, further comprising reagent introduction/removal means (46) for introducing reagents into the at least one reaction vessel (34) in at least one of the positioning planes (I-III) or for removing reagents from the at least one reaction vessel (34) of at least one of the positioning planes (I-III).

19. An apparatus according to claim 18, **characterised in that** the reagent introduction/removal means (46) for introducing/removing reagents may be connected in fluid-tight manner (at 54) with the respective reaction vessels (34).

20. An apparatus according to claim 18 or claim 19, **characterised in that** each positioning plane (I-V) comprises at least one introduction/removal positioning zone (A), wherein, on positioning at least some of the reaction vessels provided in a positioning plane (I-V) in the at least one introduction/removal positioning zone (A), these reaction vessels are freely accessible from one side, preferably an upper side, to the reagent introduction/removal means (46) for introducing/removing reagents respectively into or out of these in the flow direction (F).

21. An apparatus according to claim 7 and one of claims 18 to 20, **characterised in that** the reagent introduction/removal means (46) form the movement means (46).

22. An apparatus according to one of the preceding claims, **characterised in that** the reaction vessel carriages (20, 22) may be moved in linear manner in the respectively assigned positioning planes (I-III).

23. An apparatus according to one of claims 1 to 21, **characterised in that** the reaction vessel carriages may be moved in the assigned positioning planes on approximately circular paths.

24. An apparatus according to one of the preceding claims, further comprising means (46) for effecting movement of the reaction vessel carriages in the assigned positioning planes.

25. An apparatus according to claim 18 and according to claim 24 and optionally a further one of the preceding claims, **characterised in that** the reagent introduction/removal means (46) form the means (46) for effecting movement of the reaction vessel carriages in the assigned positioning planes.

26. An apparatus according to one of the preceding claims, **characterised in that** the at least one reaction vessel (42) in one of the positioning planes (III), preferably the last positioning plane (III) in the flow direction, is a collecting vessel (42) for receiving the reaction products produced during the chemical reaction.

27. An apparatus according to one of the preceding claims, further comprising collecting tank means (44) subsequent to the last positioning plane (III) in the flow direction.

28. An apparatus according to one of the preceding claims, **characterised in that** at least some of the positioning planes (I-V) comprise a receiving positioning zone (B) and a delivery positioning zone (A), **in that** the receiving positioning zone (B) of such a positioning plane (I-V) is aligned in the flow direction with the delivery positioning zone (A) of a preceding positioning plane (I-IV) in the flow direction (F), and/or **in that** the delivery positioning zone (A) of such a positioning plane (I-IV) is aligned in the flow direction (F) with the receiving positioning zone (B) of a subsequent positioning plane (II-V) in the flow direction (F).

29. An apparatus according to claim 28, **characterised in that** at least the first positioning plane (I) in the flow direction (F) comprises a receiving/delivery positioning zone (A, B) which constitutes both the receiving positioning zone (B) and the delivery positioning zone (A).

30. An apparatus according to claim 28 or claim 29, **characterised in that** the last positioning plane (V) in the flow direction (F) comprises only receiving positioning zones (B), preferably one receiving positioning zone (B).

31. An apparatus according to one of claims 28 to 30, **characterised in that** the positioning zones (A, B) of the different positioning planes (I-II) are arranged in such a way that the reaction vessel carriages in each positioning plane (I-V) may be arranged in such a way in their respective positioning planes (I-V) that each reaction vessel carriage in every other positioning plane may be arranged preferably by means of the reagent introduction/removal means (46) with its assigned reaction vessel(s) in each of the positioning zones (A, B) provided for these reaction vessels.

32. An apparatus according to claim 31, **characterised in that** the receiving and delivery positioning zones (B, A) of the different positioning planes (I-V) are arranged in a stepped structure, wherein in each case at least part of each delivery positioning zone (A) is not overlapped by a positioning zone (A, B) of a preceding positioning plane (I-IV) in the flow direction (F).

33. A method of performing sequential chemical reactions with an apparatus according to one of the preceding claims, comprising the following steps:
a) introduction of reagents into the at least one reaction vessel (34) of a first positioning plane (I),
b) performance of a chemical reaction, an adsorption reaction, an absorption reaction, mixing of substances or the like in the at least one reaction vessel (34),
c) arrangement of the at least one reaction vessel (34) of the first positioning plane (I) and the respectively assigned reaction vessel (34) of a second positioning plane (II) directly subsequent to the first positioning plane (I) in each case in a transfer positioning zone (T) of the two positioning planes (I, II),
d) controlled transfer of at least some of the reaction products obtained in step b) into a respectively assigned reaction vessel (34) of the second positioning plane (II), wherein the at least one reaction vessel (34) of the first positioning plane (I) and/or the respectively assigned reaction vessel (34) of the second positioning plane (II) may be positioned in such a way that the at least one reaction vessel (34) in the second positioning plane (II) is freely accessible for ad-lib introduction of reagents thereinto by means of reagent introduction/removal means (46) and/or is positioned for controlled transfer of the reaction products contained therein into a respectively assigned reaction vessel (42) of a third positioning plane (III) subsequent to the second positioning plane (II).

## Revendications

1. Dispositif (10) pour effectuer des séries de réactions chimiques, comprenant :
- un support (12) avec au moins trois niveaux de positionnement (I-III) qui sont disposés à la suite les uns des autres dans une direction de flux (F) et sensiblement parallèles les uns aux autres, dans lequel chaque niveau de positionnement (I-III) comprend une pluralité de zones de positionnement (a, b, c) sensiblement perpendiculaires au sens de marche (F) situées les unes à côté des autres et dans lequel, pour au moins une zone de positionnement (a, b, c) dans l'un des niveaux de positionnement (I-III), une zone de positionnement (a, b, c) alignée sur celle-ci dans la direction du flux (F) est disponible dans au moins un niveau de positionnement (I-III) immédiatement voisin, au moins un réacteur (34) étant prévu dans chacun des au moins trois niveaux de positionnement (I-III),
- dans au moins deux des niveaux de positionnement (I, II, III), au moins un chariot de réacteurs (20, 22) avec au moins un réacteur (34) de ce niveau de positionnement, dans lequel le chariot de réacteurs (20, 22) ne peut se déplacer que dans le niveau de positionnement (I, II) qui lui est affecté, de sorte que ledit au moins un réacteur (34) ou au moins une partie des réacteurs (34) portés par le chariot de réacteurs (20, 22) peut être disposé dans au moins une zone de positionnement pour transfert (T), un réacteur d'un niveau de positionnement (I, II, III) immédiatement voisin pouvant être affecté à chaque réacteur (34) disposé dans ladite au moins une zone de positionnement pour transfert (T) pour le transfert facultatif de réactifs entre ces réacteurs (34).

2. Dispositif selon la revendication 1, **caractérisé en ce que** ledit au moins un chariot de réacteurs (20, 22) porte au moins une rangée (36) de réacteurs (34) dans laquelle au moins un réacteur est disposé.

3. Dispositif selon la revendication 2, **caractérisé en ce que** ladite au moins une rangée (36) de réacteurs (34) sur ledit au moins un chariot de réacteurs (20, 22) est portée par un support (28) de réacteurs affecté à l'une de ces rangées (36).

4. Dispositif selon l'une des revendications 1 à 3, **caractérisé en ce que** chaque réacteur (34) porté par ledit au moins un chariot de réacteurs (20, 22) peut, pour le transfert de réactifs entre ce réacteur et un réacteur (34) qui lui est respectivement affecté dans un niveau de positionnement (II, III) immédiatement voisin se déplacer dans la direction du flux (F) vers le réacteur (34) affecté dans le niveau de positionnement (II, III) immédiatement voisin.

5. Dispositif selon la revendication 3 et la revendication 4, **caractérisé en ce que** le support (28) de réacteurs portant ladite au moins une rangée (36) de réacteurs (36) est disposé de façon à pouvoir faire un mouvement dans un sens et dans l'autre sur ledit au moins un chariot de réacteurs (20, 22) dans la direction du flux (F).

6. Dispositif selon la revendication 5, comprenant en outre des moyens de déplacement (46) pour effectuer le mouvement dans un sens et dans l'autre du support (28) de réacteurs.

7. Dispositif selon la revendication 6, **caractérisé en ce que** les moyens de déplacement (46) sont formés de façon à exercer une force de pression sur chaque réacteur (34) porté par le support (28) de réacteurs, chaque réacteur (34) pouvant, par application de la force de pression, se déplacer avec le support (28) de réacteurs contre une force de précharge en direction du réacteur (34) du niveau de positionnement (II, III) immédiatement voisin qui lui est respectivement affecté.

8. Dispositif selon la revendication 7, **caractérisé en ce que** la force de précharge est générée par des moyens de précharge (30), de préférence des moyens de ressorts, des éléments en matière plastique élastiquement déformables (30) ou similaires, agissant entre ledit au moins un chariot de réacteurs (20, 22) et le support (28) de réacteurs.

9. Dispositif selon la revendication 6, **caractérisé en ce que** les moyens de déplacement comprennent des moyens de translation agissant entre ledit au moins un chariot de réacteurs (20, 22) et le support (28) de réacteurs.

10. Dispositif selon l'une des revendications 4 à 9, **caractérisé en ce qu'**il est prévu des moyens d'étanchéité (64, 70 ; 90) qui, dans un état déplacé l'un en direction de l'autre des réacteurs (34 ; 34') de deux niveaux de positionnement immédiatement voisins, réalisent une fermeture sensiblement étanche aux fluides entre les réacteurs (34 ; 34') respectivement affectés l'un à l'autre des différents niveaux de positionnement.

11. Dispositif selon la revendication 10, **caractérisé en ce que** les moyens d'étanchéité (64, 70) comprennent une extrémité de sortie (64) sensiblement de forme pointue dudit au moins un réacteur (34) d'un niveau de positionnement ainsi qu'une extrémité réceptrice, fermée par des moyens de membrane (70), du réacteur (34) qui lui est respectivement affecté de l'autre des niveaux de positionnement, les moyens de membrane (70) pouvant être traversés par les extrémités de sortie pointues (64) lorsque les réacteurs (34) des différents niveaux de positionnement s'approchent les uns vers les autres, et former avec celles-ci une fermeture étanche aux fluides.

12. Dispositif selon la revendication 5 et la revendication 10, **caractérisé en ce que** les moyens d'étanchéité (90) comprennent une couche de matériau d'étanchéité (90) sur un côté du support (28') de réacteurs dirigée vers les réacteurs (34') affectés du niveau de positionnement immédiatement voisin, dans lequel, lorsque le support (28') de réacteurs se déplace vers les réacteurs (34') du niveau de positionnement immédiatement voisin, la couche de matériau d'étanchéité (90) vient en contact avec des extrémités réceptrices des réacteurs (34') du niveau de positionnement immédiatement voisin et forme avec celles-ci une fermeture étanche au fluides.

13. Dispositif selon l'une des revendications 10 à 12, comprenant en outre des moyens d'aération (72 ; 82) qui, lorsque les réacteurs (34 ; 34') de deux niveaux de positionnement immédiatement voisins sont reliés d'une manière étanche aux fluides, permettent une aération ou une désaération des réacteurs (34 ; 34').

14. Dispositif selon la revendication 13, **caractérisé en ce que** les moyens d'aération (72) comprennent des moyens de canaux d'aération (72) qui s'étendent depuis les extrémités de sortie (64) des réacteurs (34), de préférence à l'intérieur des réacteurs (34) respectifs, et qui sont ouverts à l'environnement, de préférence par l'intermédiaire de moyens de filtres (74).

15. Dispositif selon la revendication 12 et la revendication 13, **caractérisé en ce que** ledit au moins un réacteur (34') est porté sur le support (28') de réacteurs affecté dans la zone de son extrémité de sortie et **en ce que** les moyens d'aération (82) comprennent des moyens de canaux d'aération (82) prévus sur le support (28') de réacteurs, traversant celui-ci et la couche de matériau d'étanchéité (90) approximativement dans la direction du flux (F) et entourant l'extrémité de sortie dudit au moins un réacteur (34'), lesquels moyens de canaux d'aération (82) réalisent, lorsque le support (28') de réacteurs est en contact avec les extrémités réceptrices du réacteur (34') respectivement affecté dans le niveau de positionnement immédiatement voisin, une connection de courant gazeux entre l'espace interne du réacteur (34') affecté du niveau de positionnement immédiatement voisin et l'environnement, de préférence par l'intermédiaire de moyens de filtres (88).

16. Dispositif selon l'une des revendications précédentes, comprenant en outre des moyens de fermeture (76), de préférence des moyens de filtres (76), dans ledit au moins un réacteur (34), de préférence dans la zone de l'extrémité de sortie (64), lesquels moyens de fermeture (76) permettent le passage de fluide uniquement sous l'action d'une influence externe.

17. Dispositif selon la revendication 16, **caractérisé en ce que** l'influence externe est produite par l'application d'une pression ou d'une dépression à l'intérieur des réacteurs (34) ou bien par un effet électrique, magnétique ou gravitationnel.

18. Dispositif selon l'une des revendications précédentes, comprenant en outre des moyens d'introduction/prélèvement (46) de réactifs pour introduire des réactifs dans ledit au moins un réacteur (34) de l'un au moins des niveaux de positionnement (I-III) ou pour prélever des réactifs dudit au moins un réacteur (34) de l'un au moins des niveaux de positionnement (I-III).

19. Dispositif selon la revendication 18, **caractérisé en ce que** les moyens d'introduction/prélèvement (46) de réactifs pour introduire/prélever des réactifs peuvent être reliés de manière étanche aux fluides (en 54) avec les réacteurs (34) respectifs.

20. Dispositif selon la revendication 18 ou la revendication 19, **caractérisé en ce que** chaque niveau de positionnement (I-V) comprend au moins une zone de positionnement pour introduction/prélèvement (A), dans lequel, lors du positionnement d'au moins une partie des réacteurs prévus dans un niveau de positionnement (I-V) dans ladite au moins une zone de positionnement pour introduction/prélèvement (A), ces réacteurs sont librement accessibles d'un côté, de préférence une face supérieure, dans la direction du flux pour les moyens d'introduction/prélèvement (46) de réactifs afin d'y introduire / en prélever des réactifs.

21. Dispositif selon la revendication 7 et selon l'une des revendications 18 à 20, **caractérisé en ce que** les moyens d'introduction/prélèvement (46) de réactifs forment les moyens de déplacement (46).

22. Dispositif selon l'une des revendications précédentes, **caractérisé en ce que** les chariots de réacteurs (20, 22) peuvent se déplacer de manière rectiligne dans les niveaux de positionnement (I-III) qui leur sont respectivement affectés.

23. Dispositif selon l'une des revendications 1 à 21, **caractérisé en ce que** les chariots de réacteurs peuvent se déplacer sur des voies approximativement circulaires dans les niveaux de positionnement qui leur sont affectés.

24. Dispositif selon l'une des revendications précédentes, comprenant en outre des moyens (46) pour effectuer le déplacement des chariots de réacteurs dans les niveaux de positionnement qui leur sont affectés.

25. Dispositif selon la revendication 18 et selon la revendication 24 et le cas échéant selon une autre des revendications précédentes, **caractérisé en ce que** les moyens d'introduction/prélèvement (46) de réactifs forment les moyens (46) pour effectuer le déplacement des chariots de réacteurs dans les niveaux de positionnement qui leur sont affectés.

26. Dispositif selon l'une des revendications précédentes, **caractérisé en ce que** ledit au moins un réacteur (42) est un récipient collecteur (42) dans l'un des niveaux de positionnement (III), de préférence dans le dernier niveau de positionnement (III) dans le sens de marche, pour recevoir le produit réactionnel obtenu lors de la réaction chimique.

27. Dispositif selon l'une des revendications précédentes, comprenant en outre des moyens de bac collecteur (44) à la suite du dernier niveau de positionnement (III) dans le sens de marche.

28. Dispositif selon l'une des revendications précédentes, **caractérisé en ce que** au moins une partie des niveaux de positionnement (I-V) comprend une zone de positionnement pour réception (B) et une zone de positionnement pour évacuation (A), **en ce que** la zone de positionnement pour réception (B) d'un tel niveau de positionnement (1-V) est dirigé dans la direction du flux avec la zone de positionnement pour évacuation (A) d'un niveau de positionnement (I-IV) précédent dans la direction du flux (F) et/ou **en ce que** la zone de positionnement pour évacuation (A) d'un tel niveau de positionnement (I-IV) est alignée dans la direction du flux (F) avec la zone de positionnement pour réception (B) d'un niveau de positionnement (II-V) suivant dans la direction du flux (F).

29. Dispositif selon la revendication 28, **caractérisé en ce que** au moins le premier niveau de positionnement (I) dans la direction du flux (F) comprend une zone de positionnement pour réception/évacuation (A, (B) qui forme à la fois la zone de positionnement pour réception (B) et la zone de positionnement pour évacuation (A).

30. Dispositif selon la revendication 28 ou la revendication 29, **caractérisé en ce que** le dernier niveau de positionnement (V) dans la direction du flux (F) comprend uniquement des zones de positionnement pour réception (B), de préférence une zone de positionnement pour réception (B).

31. Dispositif selon l'une des revendications 28 à 30, **caractérisé en ce que** les zones de positionnement (A, B) des différents niveaux de positionnement (I-II) sont disposés de telle façon que les chariots de réacteurs dans chaque niveau de positionnement (I-V) peuvent être disposés dans leurs niveaux de positionnement (I-V) respectifs de telle façon que chaque chariot de réacteurs dans chaque autre niveau de positionnement peut être disposé, de préférence à l'aide de moyens d'introduction/prélèvement de réactifs (46), avec son ou ses réacteur(s) qui lui sont affectés dans chacune des zones de positionnement (A, B) prévues pour ces réacteurs.

32. Dispositif selon la revendication 31, **caractérisé en ce que** les zones de positionnement pour réception et évacuation (B, A) des différents niveaux de positionnement (I-V) sont disposés selon une structure en escalier, dans laquelle au moins une partie de chaque zone de positionnement pour évacuation (A) n'est pas recouverte par une zone de positionnement (A, B) d'un niveau de positionnement (I-IV) précédent dans la direction du flux (F).

33. Procédé pour effectuer des séries de réactions chimiques avec un dispositif selon l'une des revendications précédentes, comprenant les étapes suivantes :
a) Introduction de réactifs dans ledit au moins un réacteur (34) d'un premier niveau de positionnement (I),
b) Réalisation d'une réaction chimique, d'une réaction d'adsorption, d'une réaction d'absorption d'un mélange de substances ou similaire dans ledit au moins un réacteur (34),
c) Placement dudit au moins un réacteur (34) du premier niveau de positionnement (I) et du réacteur (34) qui lui est respectivement affecté d'un deuxième niveau de positionnement (II) immédiatement consécutif au premier niveau de positionnement (I) dans une zone de positionnement pour transfert (T) des deux niveaux de positionnement
d) Transfert contrôlé d'au moins une partie des produits réactionnels obtenus à l'étape b) dans un réacteur (34) affecté correspondant du deuxième niveau de positionnement (II), ledit au moins un réacteur (34) du premier niveau de positionnement (I) ou/et le réacteur (34) respectivement affecté du deuxième niveau de positionnement (II) pouvant être positionnés de telle façon que ledit au moins un réacteur (34) dans le deuxième niveau de positionnement (II) est librement accessible pour y introduire librement des réactifs à l'aide de moyens d'introduction/prélèvement (46) de réactifs ou/et est positionné pour transférer de manière contrôlée les produits réactionnels contenus dans ce réacteur dans un réacteur (42) respectivement affecté d'un troisième niveau de positionnement (III) consécutif au deuxième niveau de positionnement (II).
